# EUROPEAN PATENT APPLICATION

(11) **EP 4 730 625 A2**
(43) Date of publication of application: **22.04.2026**
(21) Application number: 26163404.2
(22) Date of filing: 25.09.2024
(51) Int. Cl.: H02K 9/14

(54) **ELECTRIC MOTOR SYSTEM**

(30) Priority: 25.09.2023 US 202363585024 P; 20.09.2024 US 202418891821
(62) Divisional of application: 24202615.1
(71) Applicant: Black & Decker, Inc., New Britain, CT 06053 (US)
(72) Inventor: ZOU, Vincent Wensheng, Towson, 21286 (US); WAIKAR, Shailesh P., Towson, 21286 (US); FOGLE, John B., Towson, 21286 (US); GRAPER, Sebastian, Towson, 21286 (US); CIRINCIONE, Robert J. II, Towson, 21286 (US); GRASSO, Julianna Grace, Towson, 21286 (US)
(74) Representative: Slingsby Partners LLP

(57) **Abstract**

An electric motor system, including: a motor housing; an electric motor disposed in the motor housing, the electric motor including a stator and a rotor that rotates relative to the stator; an output shaft coupled to the rotor and configured to transmit torque from the electric motor to power equipment; a shroud received over at least a portion of the motor housing; a first fan outside of the motor housing, rotatably driven by rotation of the electric motor, and configured to cause airflow within the shroud and an exterior of the motor housing; and a second fan disposed within the motor housing and driven by the electric motor, the second fan configured to cause airflow within the motor housing.

## Description

### CROSS REFERENCE TO RELATED APPLICATION

This application claims priority to and the benefit of U.S. Provisional Application No. 63/585,024, filed September 25, 2023, and titled "Electric Motor System".

### TECHNICAL FIELD

This description relates to an electric motor system that may be configured to replace an internal combustion engine for power equipment.

### BACKGROUND

An engine such as an internal combustion engine may power a wide range of power equipment including, for example, power equipment used for construction, equipment used for lawn maintenance, and power equipment used for other applications. An electric motor powered by a battery (i.e., a battery-powered electric motor) may replace an internal combustion engine to power certain power equipment.

When using a battery-powered electric motor to power certain power equipment, some technical challenges may include heat dissipation and cooling and configuration of the electric motor for various, different types of power equipment.

### SUMMARY

In some aspects, the techniques described herein relate to an electric motor system, including: a motor housing; an electric motor disposed in the motor housing, the electric motor including a stator and a rotor that rotates relative to the stator; an output shaft coupled to the rotor and configured to transmit torque from the electric motor to power equipment; a shroud received over at least a portion of the motor housing; an electronics housing containing electronics for controlling operation of the electric motor; and a first fan outside of the motor housing, driven by rotation of the electric motor, and configured to cause airflow through the electronics housing and within the shroud around an exterior of the motor housing.

In some aspects, the techniques described herein relate to an electric motor system, wherein: the motor housing includes an outer housing, a lower plate coupled to the outer housing, and a motor cover coupled to a top of the outer housing; a first end of the output shaft is exposed through an opening in the lower plate and a second end of the output shaft extends through an opening in the motor cover; and the first fan is disposed adjacent a top of the motor cover.

In some aspects, the techniques described herein relate to an electric motor system, wherein a vent is formed between a bottom of the shroud and a lower rim of the motor housing.

In some aspects, the techniques described herein relate to an electric motor system, wherein the motor housing includes a plurality of fins disposed on an outer surface of the motor housing.

In some aspects, the techniques described herein relate to an electric motor system, wherein the shroud and the motor housing form a gap between the shroud and the motor housing and the first fan causes the airflow through the gap.

In some aspects, the techniques described herein relate to an electric motor system, wherein the gap defines a first distance between the motor housing and the shroud adjacent a top of the shroud and a second distance between the motor housing and the shroud adjacent a bottom of the shroud, the first distance being greater than the second distance.

In some aspects, the techniques described herein relate to an electric motor system, wherein: the motor housing includes a strain relief for passage of a plurality of wires that are coupled to the electric motor; and the shroud includes a cutout region through which the strain relief is exposed.

In some aspects, the techniques described herein relate to an electric motor system, wherein the motor housing and the shroud are composed of a heat transferable material.

In some aspects, the techniques described herein relate to an electric motor system, wherein the electronics housing is mounted on a top portion of the shroud and the electronics housing has an opening in a bottom portion of the electronics housing in communication with an opening in the top portion of the shroud.

In some aspects, the techniques described herein relate to an electric motor system, wherein the electronics housing includes a cover attached to the electronics housing, the cover including at least one air intake opening.

In some aspects, the techniques described herein relate to an electric motor system, wherein the electronics includes an electronics module with a heat sink.

In some aspects, the techniques described herein relate to an electric motor system, further including: a frame, wherein the electronics housing, the shroud, and the motor housing are coupled to the frame, the frame including a power equipment mounting surface for mounting to the power equipment; and a battery pack interface couplable to the frame, the battery pack interface configured to receive a battery pack.

In some aspects, the techniques described herein relate to an electric motor system, wherein the battery pack interface is couplable to the frame in a plurality of orientations relative to the frame.

In some aspects, the techniques described herein relate to an electric motor system, wherein the first fan is configured to rotate at a first speed that is different than a motor speed of the rotor.

In some aspects, the techniques described herein relate to an electric motor system, wherein the first fan is coupled to the rotor by a magnetic transmission.

In some aspects, the techniques described herein relate to an electric motor system, further including at least one heat pipe disposed in the motor housing and extending into a gap defined between the motor housing and the shroud.

In some aspects, the techniques described herein relate to an electric motor system, including: a motor housing; an electric motor disposed in the motor housing, the electric motor including a stator and a rotor that rotates relative to the stator; an output shaft coupled to the rotor and configured to transmit torque from the electric motor to power equipment; a shroud received over at least a portion of the motor housing; a first fan outside of the motor housing, rotatably driven by rotation of the electric motor, and configured to cause airflow within the shroud and an exterior of the motor housing; and a second fan disposed within the motor housing and driven by the electric motor, the second fan configured to cause airflow within the motor housing.

In some aspects, the techniques described herein relate to an electric motor system, further including: an electronics housing coupled to a top portion of the shroud, the electronics housing having an opening in a bottom portion of the electronics housing in communication with an opening in the top portion of the shroud, such that the first fan causes airflow through the electronics housing.

In some aspects, the techniques described herein relate to an electric motor system, wherein the first fan is configured to rotate at a first speed that is different than a second speed of the second fan.

In some aspects, the techniques described herein relate to an electric motor system, including: a motor housing; an electric motor disposed in the motor housing, the electric motor including a stator and a rotor that rotates relative to the stator; an output shaft coupled to the rotor and configured to transmit torque from the electric motor to power equipment; a shroud received over at least a portion of the motor housing and defining a gap between the shroud and the motor housing; a first fan rotatably driven by rotation of the motor and configured to cause airflow within the shroud and outside the electric motor housing; and at least one heat pipe disposed in the motor housing and that extends into the gap.

In some aspects, the techniques described herein relate to an electric motor system, including: a motor housing; an electric motor disposed in the motor housing, the electric motor including a stator and a rotor that rotates relative to the stator; an output shaft coupled to the rotor and configured to transmit torque from the electric motor to power equipment; a shroud received over at least a portion of the motor housing; an electronics housing containing electronics for controlling operation of the electric motor; and a first fan driven by the output shaft and configured to cause airflow through the electronics housing and within the shroud around the motor housing.

In some aspects, the techniques described herein relate to an electric motor system, wherein: the motor housing includes an outer housing that attaches to a lower plate and a motor cover that attaches to a top of the outer housing; a first end of the output shaft is exposed through an opening in the lower plate and a second end of the output shaft is exposed through an opening in the motor cover; and the first fan is disposed on a top of the motor cover.

In some aspects, the techniques described herein relate to an electric motor system, wherein a vent is formed between a bottom of the shroud and a lower rim of the motor housing.

In some aspects, the techniques described herein relate to an electric motor system, wherein the motor housing includes a plurality of fins disposed on an outer surface of the motor housing.

In some aspects, the techniques described herein relate to an electric motor system, wherein the shroud and the motor housing form a gap between the shroud and the motor housing and the first fan causes the airflow through the gap.

In some aspects, the techniques described herein relate to an electric motor system, wherein the gap includes a first distance near a top of the shroud and a second distance near a bottom of the shroud, the first distance being greater than the second distance.

In some aspects, the techniques described herein relate to an electric motor system, wherein: the motor housing includes a strain relief for passage of a plurality of wires from the electric motor; and the shroud includes a cutout region through which the strain relief is exposed.

In some aspects, the techniques described herein relate to an electric motor system, wherein the motor housing and the shroud are made of a heat transferable material.

In some aspects, the techniques described herein relate to an electric motor system, wherein the heat transferable material is aluminum.

In some aspects, the techniques described herein relate to an electric motor system, wherein the electronics housing is mounted on a top of the shroud and the electronics housing has an opening in a bottom of the electronics housing, the electric motor system further including: an electronics module containing the electronics disposed within the electronics housing; and a cover attached to the electronics housing, the cover including a plurality of openings.

In some aspects, the techniques described herein relate to an electric motor system, wherein the electronics housing includes: a first sidewall, the first sidewall being straight; and a second sidewall opposite the first sidewall, the second sidewall being curved.

In some aspects, the techniques described herein relate to an electric motor system, wherein the electronics module is disposed nearer the first sidewall than the second sidewall.

In some aspects, the techniques described herein relate to an electric motor system, wherein the electronics module includes: an open end for receiving the electronics; and a bottom end opposite the open end, the bottom end having a surface and a plurality of fins projecting from the surface.

In some aspects, the techniques described herein relate to an electric motor system, wherein the plurality of fins have a gap between each of the plurality of fins.

In some aspects, the techniques described herein relate to an electric motor system, wherein: the electronics housing includes a lip around an inner surface of the electronics housing, the lip including a plurality of slots; and the electronics module includes a plurality of tabs, the plurality of tabs fitting into the plurality of slots in the lip.

In some aspects, the techniques described herein relate to an electric motor system, wherein: the lip is a first lip; the electronic housing includes a second lip around the inner surface of the electronics housing, the second lip disposed below and wider than the first lip and the second lip including a plurality of slots; and a first portion of the plurality of tabs fit into the plurality of slots in the first lip and a second portion of the plurality of tabs fit into the plurality of slots in the second lip.

In some aspects, the techniques described herein relate to an electric motor system, wherein the lip and the bottom of the electronics housing form a gap between the lip and the bottom of the electronics housing.

In some aspects, the techniques described herein relate to an electric motor system, wherein the electronics includes a heat sink, the heat sink being connected to a set of the plurality of tabs on the electronics module.

In some aspects, the techniques described herein relate to an electric motor system, wherein the electronics module is made of a heat transferable material.

In some aspects, the techniques described herein relate to an electric motor system, further including: a frame, wherein the electronics housing, the shroud, and the motor housing are mounted to the frame, the frame including a power equipment mounting surface for mounting to the power equipment; and a battery pack interface mounted to the frame, the battery pack interface for receiving a battery pack.

In some aspects, the techniques described herein relate to an electric motor system, wherein the battery pack interface is a first battery pack interface and the battery pack is a first battery pack and further including: a second battery pack interface mounted to the frame for receiving a second battery pack.

In some aspects, the techniques described herein relate to an electric motor system, wherein the electric motor includes a vertical shaft.

In some aspects, the techniques described herein relate to an electric motor system, wherein the electric motor includes a horizontal shaft.

In some aspects, the techniques described herein relate to an electric motor system, further including a series of heat pipes disposed in the motor housing, each of the heat pipes having a first end in contact with a component of the electric motor and a second end in contact with the motor housing and each of the heat pipes including a coolant.

In some aspects, the techniques described herein relate to an electric motor system, wherein each of the heat pipes penetrates through the motor housing.

In some aspects, the techniques described herein relate to an electric motor system, including: a motor housing; an electric motor disposed in the motor housing, the electric motor including a stator and a rotor that rotates relative to the stator; an output shaft coupled to the rotor and configured to transmit torque from the electric motor to power equipment; a shroud received over at least a portion of the motor housing; a first fan driven by the output shaft and configured to cause airflow within the shroud around the motor housing; and a second fan disposed within the motor housing and driven by the output shaft, the second fan configured to cause airflow within the motor housing.

In some aspects, the techniques described herein relate to an electric motor system, wherein: the motor housing includes an outer housing that attaches to a lower plate and a motor cover that attaches to a top of the outer housing; a first end of the output shaft is exposed through an opening in the lower plate and a second end of the output shaft is exposed through an opening in the motor cover; and the first fan is disposed on a top of the motor cover.

In some aspects, the techniques described herein relate to an electric motor system, wherein a vent is formed between a bottom of the shroud and a lower rim of the motor housing.

In some aspects, the techniques described herein relate to an electric motor system, wherein the motor housing includes a plurality of fins disposed on an outer surface of the motor housing.

In some aspects, the techniques described herein relate to an electric motor system, wherein the shroud and the motor housing form a gap between the shroud and the motor housing and the first fan causes the airflow through the gap.

In some aspects, the techniques described herein relate to an electric motor system, wherein the gap includes a first distance near a top of the shroud and a second distance near a bottom of the shroud, the first distance being greater than the second distance.

In some aspects, the techniques described herein relate to an electric motor system, wherein: the motor housing includes a strain relief for passage of a plurality of wires from the electric motor; and the shroud includes a cutout region through which the strain relief is exposed.

In some aspects, the techniques described herein relate to an electric motor system, wherein the motor housing and the shroud are made of a heat transferable material.

In some aspects, the techniques described herein relate to an electric motor system, wherein the heat transferable material is aluminum.

In some aspects, the techniques described herein relate to an electric motor system, further including: an electronics housing mounted on a top of the shroud, the electronics housing having an opening in a bottom of the electronics housing; an electronics module containing the electronics disposed within the electronics housing; and a cover attached to the electronics housing, the cover including a plurality of openings.

In some aspects, the techniques described herein relate to an electric motor system, wherein the electronics housing includes: a first sidewall, the first sidewall being straight; and a second sidewall opposite the first sidewall, the second sidewall being curved.

In some aspects, the techniques described herein relate to an electric motor system, wherein the electronics module is disposed nearer the first sidewall than the second sidewall.

In some aspects, the techniques described herein relate to an electric motor system, wherein the electronics module includes: an open end for receiving the electronics; and a bottom end opposite the open end, the bottom end having a surface and a plurality of fins projecting from the surface.

In some aspects, the techniques described herein relate to an electric motor system, wherein the plurality of fins have a gap between each of the plurality of fins.

In some aspects, the techniques described herein relate to an electric motor system, wherein: the electronics housing includes a lip around an inner surface of the electronics housing, the lip including a plurality of slots; and the electronics module includes a plurality of tabs, the plurality of tabs fitting into the plurality of slots in the lip.

In some aspects, the techniques described herein relate to an electric motor system, wherein: the lip is a first lip; the electronic housing includes a second lip around the inner surface of the electronics housing, the second lip disposed below and wider than the first lip and the second lip including a plurality of slots; and a first portion of the plurality of tabs fit into the plurality of slots in the first lip and a second portion of the plurality of tabs fit into the plurality of slots in the second lip.

In some aspects, the techniques described herein relate to an electric motor system, wherein the lip and the bottom of the electronics housing form a gap between the lip and the bottom of the electronics housing.

In some aspects, the techniques described herein relate to an electric motor system, wherein the electronics includes a heat sink, the heat sink being connected to a set of the plurality of tabs on the electronics module.

In some aspects, the techniques described herein relate to an electric motor system, wherein the electronics module is made of a heat transferable material.

In some aspects, the techniques described herein relate to an electric motor system, further including: a frame, wherein the electronics housing, the shroud, and the motor housing are mounted to the frame, the frame including a power equipment mounting surface for mounting to the power equipment; and a battery pack interface mounted to the frame, the battery pack interface for receiving a battery pack.

In some aspects, the techniques described herein relate to an electric motor system, wherein the battery pack interface is a first battery pack interface and the battery pack is a first battery pack and further including: a second battery pack interface mounted to the frame for receiving a second battery pack.

In some aspects, the techniques described herein relate to an electric motor system, wherein the electric motor includes a vertical shaft.

In some aspects, the techniques described herein relate to an electric motor system, wherein the electric motor includes a horizontal shaft.

In some aspects, the techniques described herein relate to an electric motor system, further including a series of heat pipes disposed in the motor housing, each of the heat pipes having a first end in contact with a component of the electric motor and a second end in contact with the motor housing and each of the heat pipes including a coolant.

In some aspects, the techniques described herein relate to an electric motor system, wherein each of the heat pipes penetrates through the motor housing.

In some aspects, the techniques described herein relate to an electric motor system, including: a motor housing; an electric motor disposed in the motor housing, the electric motor including a stator and a rotor that rotates relative to the stator; an output shaft coupled to the rotor and configured to transmit torque from the electric motor to power equipment; a shroud received over at least a portion of the motor housing and defining a gap between the shroud and the motor housing; a fan driven by the output shaft and configured to cause airflow within the shroud around the motor housing; and at least one heat pipe disposed in the motor housing and that extends into the gap.

In some aspects, the techniques described herein relate to an electric motor system, wherein the at least one heat pipe includes a first end in contact with a component of the electric motor and a second end in contact with the motor housing and the at least one heat pipe includes a coolant.

In some aspects, the techniques described herein relate to an electric motor system, wherein the fan is a first fan and further including a second fan disposed within the motor housing and driven by the output shaft, the second fan configured to cause airflow within the motor housing.

The details of one or more implementations are set forth in the accompanying drawings and the description below. Other features will be apparent from the description and drawings, and from the claims.

### BRIEF DESCRIPTION OF THE DRAWINGS

FIG. 1A is a perspective view of an electric motor system or powerhead used to power a corner trowel.
FIG. 1B is a perspective view of the electric motor system or powerhead of FIG. 1A used to power a power trowel.
FIG. 1C is a perspective view of the electric motor system of FIG. 1A used to power a water pump.
FIG. 1D is a perspective view of the electric motor system of FIG. 1A used to power a string trimmer.
FIG. 1E is a perspective view of the electric motor system of FIG. 1A used to power a soft cutting saw.
FIG. 1F is a perspective view of the electric motor system of FIG. 1A used to power a log splitter.
FIGS. 1G and 1H are perspective views of the electric motor system of FIG. 1A used to power a plate compactor.
FIGS. 1I and 1J are perspective views of the electric motor system of FIG. 1A used to power a rammer with the electric motor system having a detached battery pack and frame.
FIGS. 1K and 1L are perspective views of the electric motor system of FIG. 1A used to power a rammer with the electric motor system having an attached battery pack and frame.
FIG. 2 is a bottom perspective view of an embodiment of an electric motor system that may be used to power one or more of the power equipment shown in FIGS. 1A-1L.
FIG. 3 is a bottom perspective view of the electric motor system of FIG. 2 without the battery pack and the battery pack interface.
FIG. 4 is a top perspective view of the electric motor system FIG. 2.
FIG. 5 is a top perspective view of the electric motor system of FIG. 2 without the battery pack and the battery pack interface.
FIG. 6 is a top perspective view of the electric motor system of FIG. 2 without the battery pack and the battery pack interface and with the frame as partially hidden.
FIG. 7 is a side vertical perspective view of the electric motor system of FIG. 2 without the frame, the battery pack interface, and the battery pack.
FIG. 8 is a side horizontal perspective view of the electric motor system of FIG. 2 without the frame, the battery pack interface, and the battery pack.
FIG. 9 is a top perspective view of the electric motor system of FIG. 2.
FIG. 10 is an exploded view of the electric motor system of FIG. 2.
FIG. 11A is a top view of a first portion of an electronics housing of the system of FIG. 2.
FIG. 11B is a side, partial cutaway perspective view of the open box of the electronics housing of FIG. 11A.
FIG. 12 is a top view of the first portion of the electronics housing of FIG. 11A with an embodiment of an electronics module inserted in the first portion of the electronics housing.
FIG. 13 is a top view of the electronics housing of FIG. 2 with a second portion of the electronics housing coupled to the first portion of the electronics housing.
FIG. 14 is a bottom perspective view of the electronics module of FIG. 12.
FIG. 15 is a top perspective view of the electronics module of FIG. 12.
FIG. 16 is a perspective cross section view of a portion of the electric motor system of FIG. 2.
FIG. 17 is another perspective cross section view of the electric motor system of FIG. 2.
FIG. 18A is a perspective view of the electronics module being assembled in the electronics housing of FIG. 11A.
FIG. 18B is a top view of the electronics module in electronics housing of FIG. 11A.
FIG. 19 is a side partially transparent view of the electronics housing of FIG. 11A with the second portion of the electronics housing.
FIG. 20 is a perspective view of the electric motor system without the first fan and illustrating a partially transparent view of the electronics housing above the shroud.
FIG. 21 is a perspective view of the electric motor system without the first fan and illustrating a partially transparent view of the electronics housing secured to the shroud.
FIG. 22 is a perspective top view of an embodiment of an electric motor housing of the system of FIG. 2.
FIG. 23 is a perspective top view of the electric motor housing of FIG. 22 with the first fan.
FIG. 24 is a perspective top view of the electric motor housing of FIG. 22 with the fan attached.
FIG. 25 is a perspective top view of the electric motor housing and fan of FIG. 23 with an embodiment of a shroud for use with the motor system of FIG. 2.
FIG. 26 is a bottom view of the shroud of FIG. 25.
FIG. 27 is a side view of the shroud of FIG. 25.
FIG. 28 is cross section view of the electric motor system of FIG. 2.
FIG. 29 is a top perspective view of the electric motor system in the frame with the cover for the electronics housing removed.
FIG. 30 is a cross section view of the electric motor system of FIG. 2 illustrating air flow.
FIG. 31 is a graph illustrating performance an example of an electric motor system in accordance with the disclosure in this patent application.
FIGS. 32A and 32B are graphs illustrating thermal improvements of an example of an electric motor system in accordance with the disclosure in this patent application.
FIG. 32C is a table illustrating the thermal improvements of an example of an electric motor system using the graphs of FIGS. 32A and 32B.
FIG. 33 is a graph illustrating thermal improvement of an example of an electric motor system in accordance with the disclosure in this patent application.
FIGS. 34A and 34B are graphs illustrating the system efficiency of an example of an electric motor system in accordance with the disclosure in this patent application.
FIGS. 35A-35B are perspective views of another embodiment of an electric motor system.
FIG. 35C is a side view of the electric motor system of FIG. 35A.
FIG. 35D is a perspective view of a control module for the electric motor system of FIG. 35A.
FIG. 35E is a schematic view of the electric motor system of FIG. 35A implemented on a power trowel.
FIGS. 36A-36N illustrate embodiments of a power tool system with various battery pack configurations.
FIG. 37 is a bottom view of an embodiment of a frame for the electric motor system of FIG. 2.
FIG. 38 is a bottom perspective view of the frame of FIG. 37.
FIG. 39A is a bottom perspective view of another embodiment of an electric motor system with a battery pack on a left side and a control module on a right side of a system housing.
FIG. 39B is a top perspective view of the electric motor system of FIG. 39A.
FIG. 40A is a bottom perspective view of another embodiment of an electric motor system with a battery pack on a right side and a control module on a left side of a system housing.
FIG. 40B is a top perspective view of the electric motor system of FIG. 40A.
FIG. 41 is a top perspective view of another embodiment of an electric motor system with a battery pack on a top of a system housing.
FIG. 42A is a top perspective view of another embodiment of an electric motor system with two battery packs on left and right sides of a system housing and a control module on a top of the system housing.
FIG. 42B is a bottom perspective view of the electric motor system of FIG. 42A.
FIG. 43 is a side perspective view of another embodiment of an electric motor system having a vertical shaft and one battery pack.
FIG. 44 is a side perspective view of another embodiment of an electric motor system having a vertical shaft and one battery pack.
FIG. 45 is a side perspective view of another embodiment of an electric motor system having a vertical shaft and two battery packs.
FIG. 46 is a top perspective view of another embodiment of an electric motor system.
FIG. 47 is top perspective view of the electric motor system of FIG. 46 with a partial cut away of the shroud and the motor cover.
FIG. 48 is a top cross section view of the electric motor system of FIG. 46.
FIG. 49 is another top cross section view of the electric motor system of FIG. 46.
FIG. 50 is a side perspective cross section view of the electric motor system of FIG. 46 illustrating an air flow path.
FIG. 51 is a side cross section view of the electric motor system of FIG. 46 illustrating air flow paths.
FIG. 52 is an example of a heat pipe from the electric motor system of FIG. 46.
FIGS. 53 and 54 illustrate another example embodiment of an electric motor system.
FIG. 55 is a side perspective view of another embodiment of an electric motor system having a magnetic transmission to drive a fan.
FIG. 56 is a side cross section view of the electric motor system of FIG. 55.
FIG. 57 is an exploded view of the electric motor system of FIG. 55.
FIG. 58 is a side perspective view of the magnetic transmission of the electric motor system of FIG. 55.
FIG. 59 is a cross section view of the magnetic transmission of FIG. 58.
FIG. 60 is a perspective view of the first magnetic gear of FIG. 57.
FIG. 61 is a perspective view of the first magnetic gear of FIG. 60 with the first magnetic gear top bracket removed.
FIG. 62 is an exploded view of the first magnetic gear of FIG. 60.
FIG. 63 is a perspective view of the modulator of FIG. 57.
FIG. 64 is an exploded view of the modulator of FIG. 63.
FIG. 65 is a perspective view of the second magnetic gear of FIG. 57 with an integrated fan.
FIG. 66 is a perspective view of the second magnetic gear of FIG. 65 with the integrated fan removed.
FIG. 67 is a perspective view of the second magnetic gear of FIG. 66 with the second magnetic gear back iron removed.
FIG. 68 is an exploded view of the second magnetic gear of FIG. 65.
FIG. 69A is a perspective view of the magnetic blocks of the magnetic transmission of FIG. 57.
FIG. 69B is a schematic diagram of the magnetic blocks of FIG. 69A, projected in a line with a magnetic flux plot.
FIG. 70 is an exploded view of the magnetic block of the magnetic transmission of FIG. 57.

### DETAILED DESCRIPTION

This document describes systems and techniques for using a battery-powered, electric motor system (also referred to interchangeably throughout as a powerhead) to power various equipment. The electric motor system includes one or more battery packs, an electric motor, and electronics for controlling the electric motor, together which includes one or more features that provide technical solutions to the technical problems described above. The electric motor system also may include a control module having a user interface for controlling the electric motor. The one or more features described herein also provide technical solutions to other technical problems related to use of the electric motor and the other related components with the various, different equipment.

As used herein, the terms "equipment," "outdoor power equipment," "outdoor power equipment machine," "power equipment," "maintenance machine," "construction equipment," "construction power tool," "power tool," and "power equipment machine" are used interchangeably throughout. By way of example, these terms may refer to and are intended to refer to any of robotic, partially robotic ride-on, walk-behind, sulky equipped, autonomous, semi-autonomous (e.g., user-assisted automation), remote control, stand-alone, or multi-function variants of any of the following: powered carts and wheel barrows, lawn mowers, lawn and garden tractors, lawn trimmers, string trimmers, lawn edgers, lawn and leaf blowers or sweepers, hedge trimmers, pruners, loppers, chainsaws, rakes, pole saws, tillers, cultivators, aerators, log splitters, post hole diggers, trenchers, stump grinders, snow throwers (or any other snow or ice cleaning or clearing implements), lawn, wood and leaf shredders and chippers, lawn and/or leaf vacuums, pressure washers, lawn equipment, garden equipment, driveway sprayers and spreaders, sports field marking equipment, corner trowels, power trowels, water pumps, rammers, plate compactors, as well as other equipment not listed here.

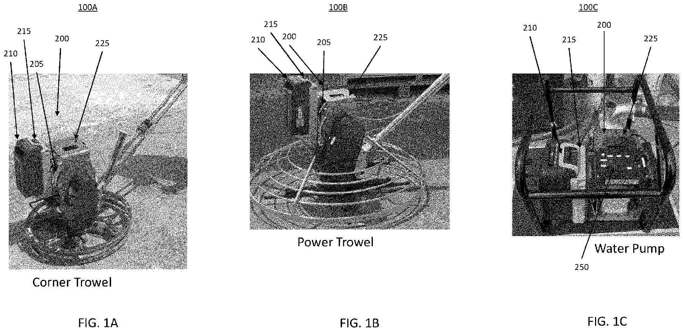

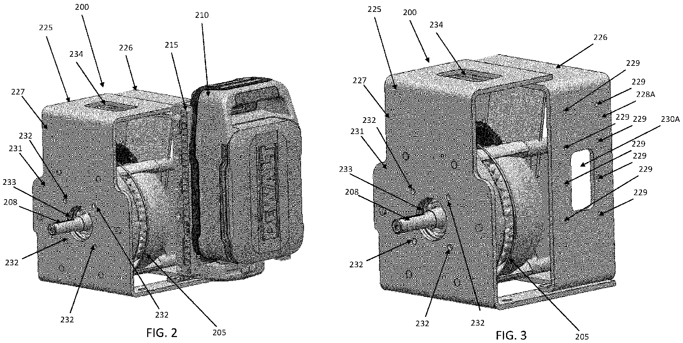

FIGS. 1A-1L provide examples of equipment 100A-100I that are driven by an electric motor system 200. The electric motor system 200 includes an electric motor 205, one or more battery packs 210, one or more battery pack interfaces 215, an electronics housing 220, a frame 225, and a control module 250. Each battery pack 210 provides power to the electric motor 205. Not all of the components of the electric motor system 200 are visible in each of FIGS. 1A-1L. The electric motor system 200 and its components are illustrated and described in more detail with respect to FIGS. 2-30 below.

The electric motor system 200, which includes the combination of the electric motor 205, the battery pack 210, the battery pack interface 215, the electronics housing 220, and the frame 225 may be referred to as a "powerhead." It is understood that these are just examples and that the electric motor system 200 and various combinations of the components that are a part of the electric motor system 200 may be used to power other equipment not illustrated here. The details and features of the electric motor 205 are described below in more detail.

Here, FIGS. 1A-1L illustrate that the electric motor system 200 may be used to power the equipment 100A-100I instead of an internal combustion engine, which may be powered by a fossil fuel, such as gasoline or diesel (e.g., the commonly used Honda^{®} GX120 sold by American Honda Motor Co., Inc.). In some examples, the electric motor system 200 (the "powerhead") may replace an internal combustion engine typically used to power the equipment 100A-100I. That is, the internal combustion engine used to power the equipment 100A-100I may be removed and the electric motor system 200 may be installed in its place to drive the equipment 100A-100I. In some examples, the electric motor system 200 (the "powerhead") may be installed on the equipment 100A-100I at the time of manufacture and/or the time of assembly. That is, the electric motor system 200 may be installed as original parts on the equipment 100A-100I.

It is further noted that various examples of the electric motor 205, the battery pack 210, and the other components are discussed in more detail below. For example, the battery pack 210 illustrated in FIGS. 1A-1L show that the battery pack 210 includes a single battery pack. In other examples discussed in more detail below, the battery pack 210 may include other configurations with the single battery pack with respect to the frame 225 and other configurations with multiple battery packs with respect to the frame 225.

FIG. 1A illustrates a corner trowel 100A powered by the electric motor system 200. In this example, the corner trowel 100A is a 24 inch corner trowel. FIG. 1B illustrates a power trowel 100B powered by the electric motor system 200. In this example, the power trowel 100B is a 36 inch power trowel.

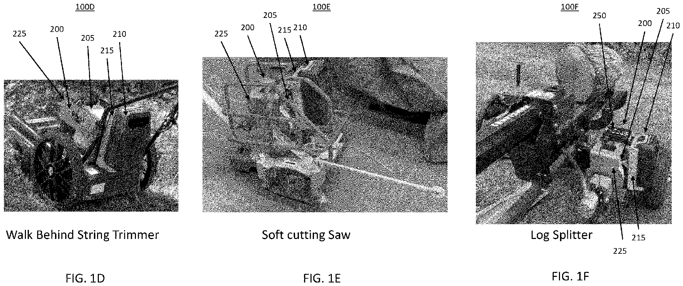

FIG. 1C illustrates a water pump 100C powered by the electric motor system 200. FIG. 1D illustrates a string trimmer 100D powered by the electric motor system 200. In this example, the string trimmer 100D is a walk behind string trimmer. FIG. 1E illustrates a soft cutting saw 100E powered by the electric motor system 200. FIG. 1F illustrates a log splitter 100F powered by the electric motor system 200.

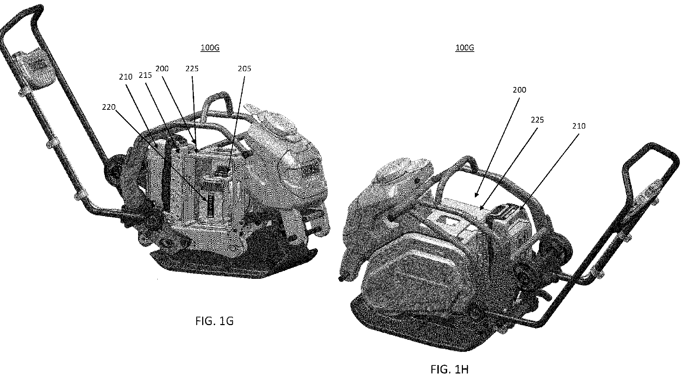

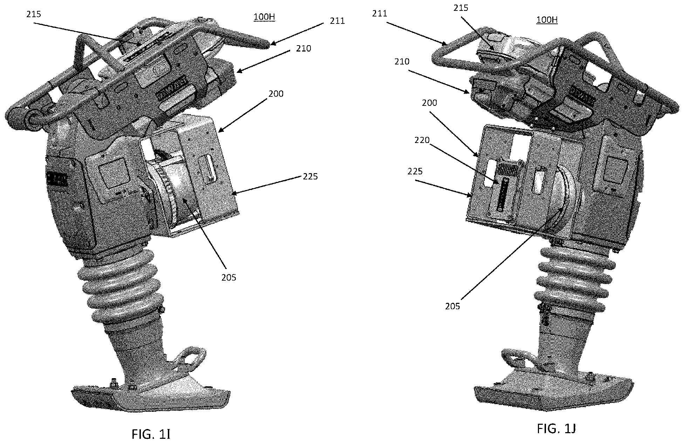

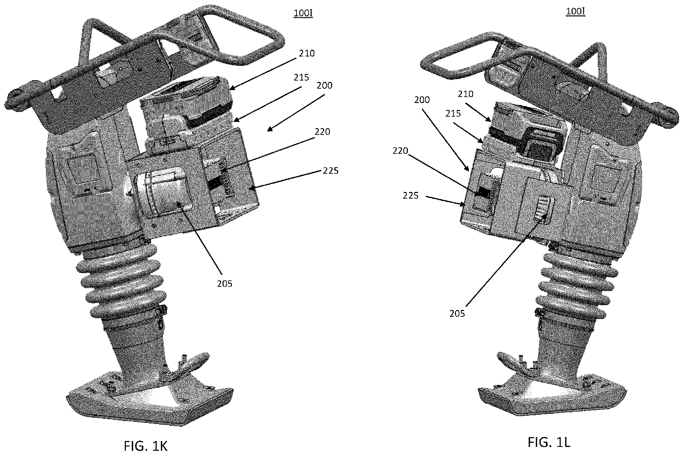

FIGS. 1G and 1H illustrate a plate compactor 100G powered by the electric motor system 200. FIGS. 1I and 1J illustrate a rammer 100H powered by the electric motor system 200. In these examples, the battery pack 210 is secured in a frame 211, where the battery pack 210 and the frame 211 are detached from the rest of the electric motor system 200 including the frame 225. FIGS. 1K and 1L illustrate a rammer 100I powered by the electric motor system 200. In these examples of the rammer 100I, the battery pack 210 is attached to the frame 225 instead of being detached from the frame 225, as illustrated in the rammer 100H. Further disclosure of a rammer for use with the electric motor system of the present application can be found, e.g., in UK Patent Application Nos. GB2604347A, GB2604349A, GB2604348A, GB2604350A.

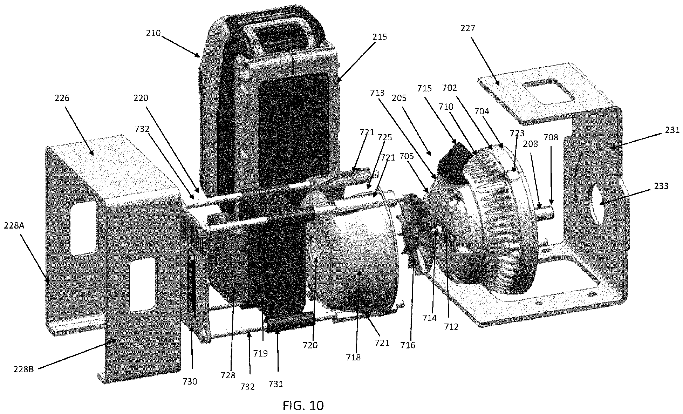

FIGS. 2-9 illustrate various views and configurations of the electric motor system 200 with and without the battery pack 210 and the battery pack interface 215. FIG. 10 illustrates an exploded view of the electric motor system 200.

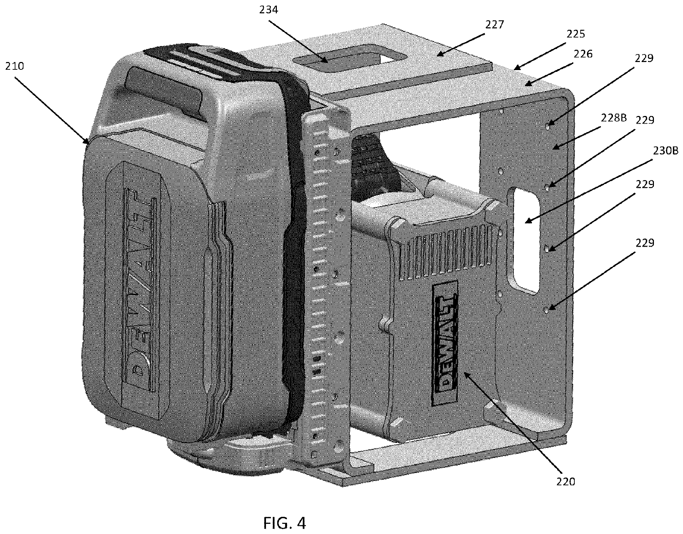

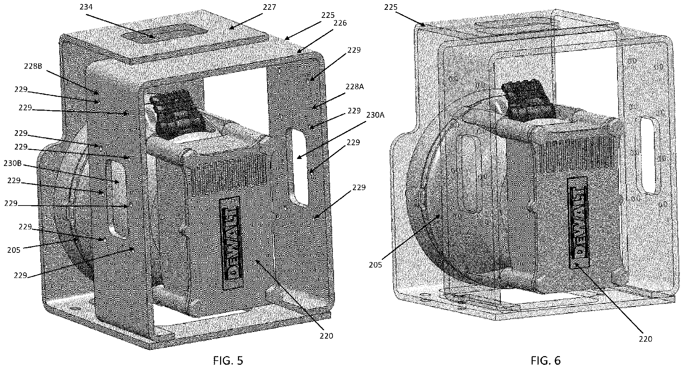

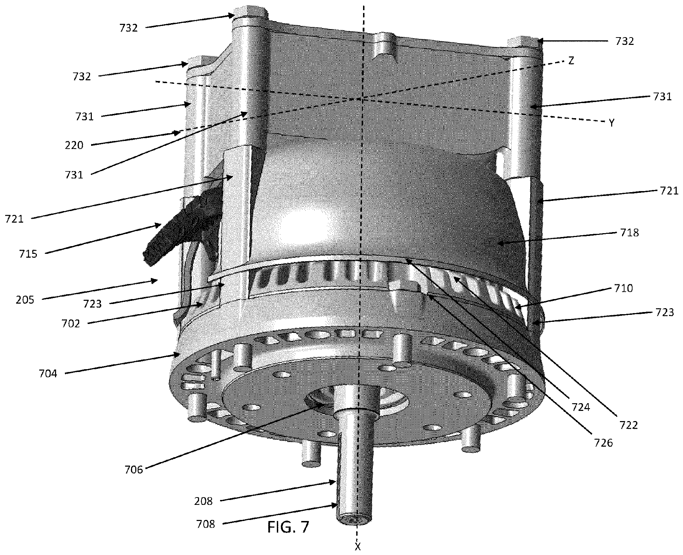

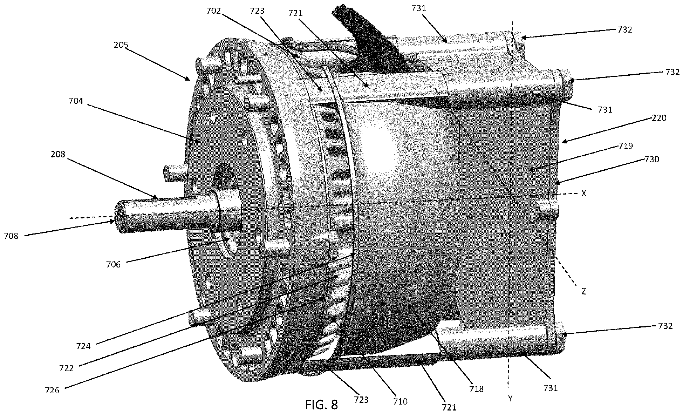

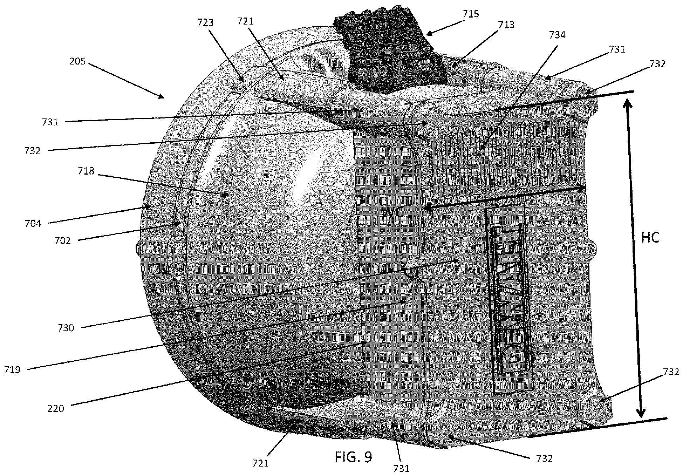

More specifically, FIG. 2 is a bottom perspective view of the electric motor system 200. FIG. 3 is a bottom perspective view of the electric motor system 200 without the battery pack 210 and the battery pack interface 215. FIG. 4 is a top perspective view of the electric motor system 200. FIG. 5 is a top perspective view of the electric motor system 200 without the battery pack 210 and the battery pack interface 215. FIG. 6 is a top perspective view of the electric motor system 200 without the battery pack 210 and the battery pack interface 215 and with the frame 225 as partially hidden in order to show more of the electric motor 205 and the electronics housing 220. FIG. 7 is a side vertical perspective view of the electric motor 205 and the electronics housing 220. FIG. 8 is a side horizontal perspective view of the electric motor 205 and the electronics housing 220. FIG. 9 is a top perspective view of the electric motor 205 and the electronics housing 220. FIG. 10 is an exploded view of the electric motor system 200.

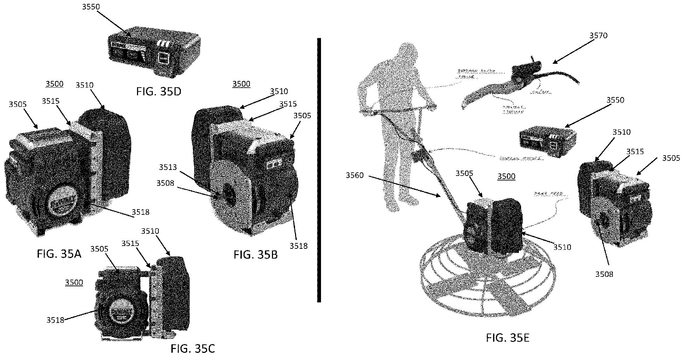

As noted above, the electric motor system 200 includes the electric motor 205, the battery pack 210, the battery pack interface 215, the electronics housing 220, and the frame 225. The electric motor system 200 also may include a control module, as best seen below in FIGS. 35D, 35E, and 39A-45. As seen in FIGS. 2-6, the frame 225 enables the other components of the electric motor system 200, including the electric motor 205, the battery pack 210, the battery pack interface 215, and the electronics housing 220 to be affixed as a unit to the various equipment, such as equipment 100A-100I. The frame 225 also provides protection for the electric motor 205 and the electronics housing 220 from debris and other objects when the electric motor system 200 is affixed to the equipment 100A-100I.

The frame 225 includes an upper frame portion 226 and a lower frame portion 227. In some examples, the upper frame portion 226 and the lower frame portion 227 may be separate portions that are affixed to one another such as by welding or other similar techniques. In some examples, the upper frame portion 226 and the lower frame portion 227 may be a single, integrated unit, instead of two separate portions, that may be formed, for example, through a casting process, a molding process, or other similar process.

The upper frame portion 226 includes a battery pack interface mounting surface 228A and a battery pack interface mounting surface 228B, as best seen in FIG. 5. The battery pack interface mounting surface 228A and the battery pack interface mounting surface 228B provide surfaces for mounting the battery pack interface 215 to which the battery pack 210 can be attached. In some examples, by having two battery pack interface mounting surfaces 228A and 228B, a battery pack interface 215 may be mounted on either one of the battery pack interface mounting surfaces 228A and 228B or on both of the battery pack interface mounting surfaces 228A and 228B. In this manner, the electric motor system 200 has different mounting configurations to enable the electric motor system 200 to be mounted on different types of equipment and in various different locations on the different types of equipment. Additionally, having multiple battery pack interface mounting surfaces 228A and 228B with a battery pack interface 215 and a battery pack 210 attached to each of the battery pack interface mounting surfaces 228A and 228B enables more power and longer runtimes for the electric motor 205.

Each of the battery pack interface mounting surfaces 228A and 228B includes multiple mounting holes 229 to attach the battery pack interface 215 to the battery pack interface mounting surfaces 228A and 228B, as best seen in FIGS. 3 and 5. The multiple mounting holes 229 provide openings in the battery pack interface mounting surfaces 228A and 228B through which a fastener may be used to secure the battery pack interface 215 to each of the battery pack interface mounting surfaces 228A and 228B. The battery pack interface 215 may include corresponding mounting holes that match the pattern of the multiple mounting holes 229.

The upper frame portion 226 also includes an opening 230A in the battery pack interface mounting surface 228A and an opening 230B in the battery pack interface mounting surface 228B. The opening 230A and the opening 230B may be sized to enable a hand to fit through to lift and move the electric motor system 200. The opening 230A and the opening 230B also may be used to enable manufacturing equipment on an assembly line to lift, move, and place the electric motor system 200 on equipment during an assembly process. The opening 230A and the opening 230B may be used to move the electric motor system 200 prior to a battery pack interface 215 being secured to one or both of the battery pack interface mounting surfaces 228A and 228B. The opening 230A and the opening 230B also may be used for other purposes including airflow and heat dissipation from the electric motor 205 and the electronics housing 220.

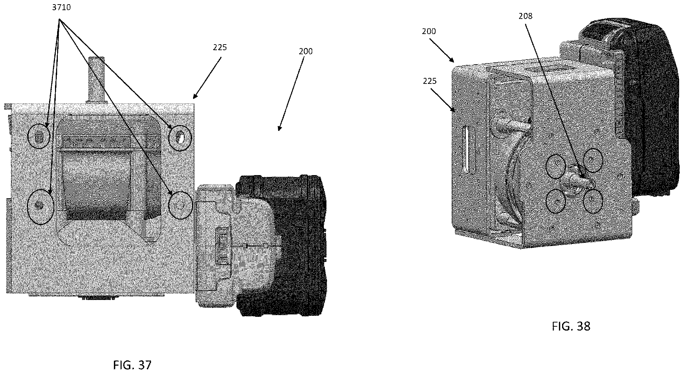

The lower frame portion 227 includes an equipment mounting surface 231 to enable the electric motor system 200 to be mounted to equipment such as, for examples, equipment 100A-100I, as best seen in FIGS. 2 and 3. The equipment mounting surface 231 includes openings 232 to fasten or otherwise secure the frame 225 to the equipment 100A-100I. Additional details regarding the openings 232 are provided below with respect to FIGS. 37 and 38. The pattern of the openings 232 may match a pattern of corresponding openings on the equipment 100A-100I and may match a pattern of openings on an internal combustion engine that the electric motor system replaces on the power equipment.

The lower frame portion 227 includes a shaft opening 233 in the equipment mounting surface 231 through which an output shaft 208 driven by the electric motor 205 protrudes and connects to an input member of the equipment such as, for example, equipment 100A-100I, as best seen in FIGS. 2 and 3. The diameter of the shaft opening 233 enables free rotation of the output shaft 208.

Similar to the opening 230A and the opening 230B in the upper frame portion 226, the lower frame portion 227 includes an opening 234 that may be sized to enable a hand to fit through to lift and move the electric motor system 200. The opening 234 also may be used to enable manufacturing equipment on an assembly line to lift, move, and place the electric motor system 200 on equipment during an assembly process.

In some examples, the frame 225 is a metal structure that mounts to the equipment 100A-100I. In some examples, the frame 225 may be made of other materials or a combination of metal and other materials that provide a sturdy structure for mounting to the equipment 100A-100I such as a plastic or composite material.

As noted above, in some examples, the battery pack interface 215 mounts to either of the battery pack interface mounting surfaces 228A and 228B. The battery pack interface 215 provides an interface for the battery pack 210 to provide power to the electric motor 205. The battery pack interface 215 may include a bus connection (not shown) such as a direct current (DC) bus connection as a conduit and a means for transmission of the electric power from the battery pack 210 to the electric motor 205. The battery pack interface also may include electrical terminals that interface with corresponding terminals on the battery pack to send or receive information to or from the battery pack, such as battery pack identification, state of charge, temperature, and cell monitoring information. The battery pack interface 215 enables the battery pack 210 to slide in and lock in place.

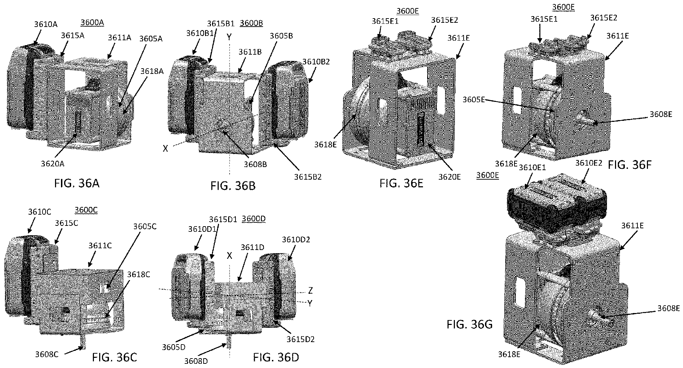

In some examples, a battery pack interface 215 may be mounted on each of the battery pack interface mounting surfaces 228A and 228B to enable more than one battery pack 210 to be connected to and provide power to the electric motor 205. FIGS. 36A-36M and 39A-45 provide additional examples and configurations for the battery pack interface 215 and the battery pack 210.

The battery pack 210 includes multiple battery cells configured to have a particular battery capacity and to output a particular voltage. The battery pack 210 may be any of various types of battery packs that have different battery capacities and output different voltages.

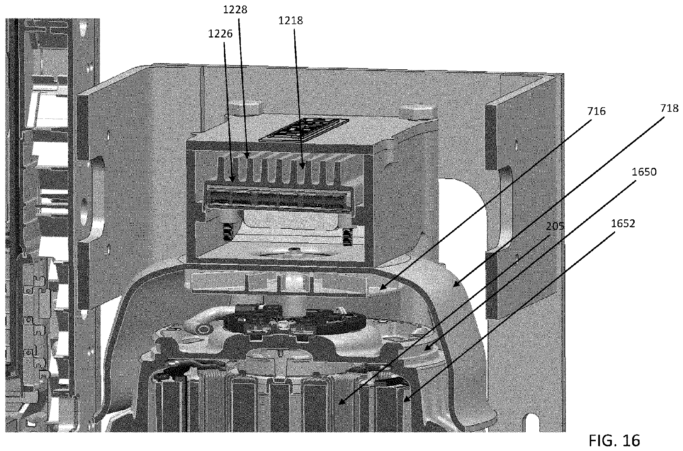

FIGS. 7-10 illustrate more details of the electric motor system 200 with a focus on the electric motor 205 and the electronics housing 220. In some examples, the electric motor 205 is an outer-rotor, brushless direct current (BLDC) motor. The outer-rotor, BLDC motor may be a 140mm motor. In other examples, the outer-rotor, BLDC motor may include a different size motor. More details of an example outer-rotor BLDC motor may be found below with respect to FIGS. 16, 17, 28, and 30 and in U.S. Patent Application Ser. No. 18/236,604, filed on August 22, 2023, titled "Sealed Motor with Internal Cooling Features".

The electric motor 205 is a fully sealed motor including an outer housing 702 (also referred to as an end cap) that mates with a lower plate 704 (also referred to as an end cap). The electric motor 205 includes a motor cover 705 that is secured to the outer housing 702. The motor cover 705 together with the outer housing 702 and the lower plate 704 form a water-sealed containment around the other motor components that are disposed within the outer housing 702. The motor cover 705 protects motor power and signal wiring connections and other motor components against ingress of water and contaminated air. Together the outer housing 702, the lower plate 704, and the motor cover 705 form a motor housing.

Discussed herein are additional features of the electric motor system 200. The outer housing 702, the lower plate 704, and the motor cover 705 form the motor housing, which is a water-sealed containment, around the stator and the rotor. The outer housing 702 is positioned between the lower plate 704 and the motor cover 705. The outer housing 702, the lower plate 704, and the motor cover 705 are circular in shape. In some examples, the outer housing 702, the lower plate 704, and the motor cover 705 are made of metal. One or more of the outer housing 702, the lower plate 704, and the motor cover 705 may be made of a heat conductive (or heat transferable) material such as aluminum, thus acting as a heat sink for the components of the electric motor 205.

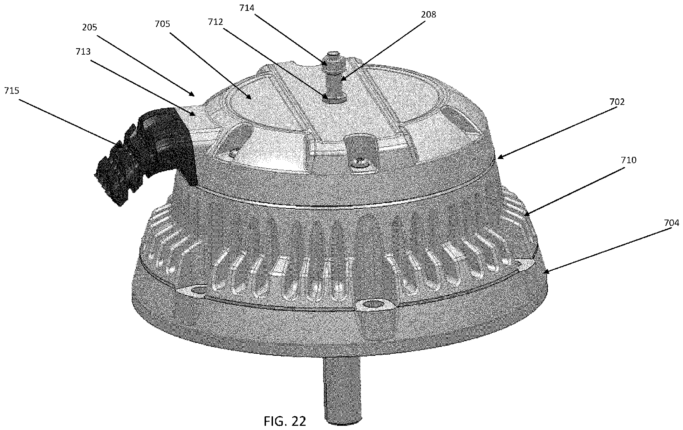

The lower plate 704 includes a center opening 706 through which the output shaft 208 extends. The output shaft 208 is driven by the rotor. A first end 708 of the output shaft 208 attaches to an input shaft of the equipment to drive the equipment. Additionally, the output shaft 208 may be coupled to a fan that is internal to the electric motor 205. The output shaft 208 imparts (or transmits) rotation to the fan that is internal to the electric motor 205. The fan that is internal to the electric motor 205 may be referred to as a second fan and is described in more detail below with respect to FIGS. 16, 17, 28, and 30 The outer housing 702 optionally may include a series of fins 710 around the periphery of the outer housing 702, as best seen in the exploded view of FIG. 10 and in later FIGS. 22-24. The fins 710 extend perpendicular to a surface of the lower plate 704 and a surface of the motor cover 705. The fins 710 include sloped outer edges arranged to increase the outer surface area of the outer housing 702 for improved heat transfer from the electric motor 205. The fins 710 are discussed in more detail below in FIGS. 22-24.

The motor cover 705 includes an opening 712 through which a second end 714 of the output shaft 208 extends. The electric motor system 200 includes a first fan 716 and a shroud 718. The second end 714 of the output shaft 208 attaches to the first fan 716 disposed outside the motor cover 705. The second end 714 of the output shaft 208 imparts (or transmits) rotational motion to the first fan 716. The first fan 716 is external to the electric motor 205. The motor cover 705 includes a grommet 713 and a strain relief 715. The grommet 713 captures the strain relief 715, which is coupled to the motor cover 705 through the grommet 713. A wire cord (not shown) is captured by the strain relief 715 at a point of exit from the outer housing 702.

The shroud 718 includes an opening 720 at a top of the shroud 718. In some examples, the shroud 718 covers or at least partially covers the first fan 716, the motor cover 705, the outer housing 702, and the lower plate 704. In some examples, the shroud 718 may be made of a heat transferable material such as, for example, a metal like aluminum. In other examples, the shroud 718 may be made of other types of heat transferable material.

The shroud 718 includes a plurality (e.g., four) posts 721 that align with a plurality (e.g., four) posts 723 on the lower plate 704. Fasteners 732, such as screws, thread through the posts 721 and the posts 723 to secure the shroud 718 to the lower plate 704. The posts 723 are located between the fins 710 such that the fasteners 732 are circumferentially aligned with the lower portions of the fins 710.

The shroud 718 includes a cutout region 725 to accommodate the strain relief 715 on the motor cover 705. In this manner, the cutout region 725 provides an area that allows passage of motor power and control wires through the strain relief 715.

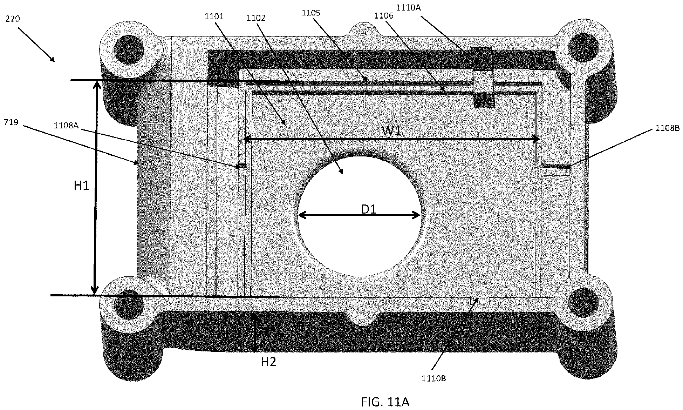

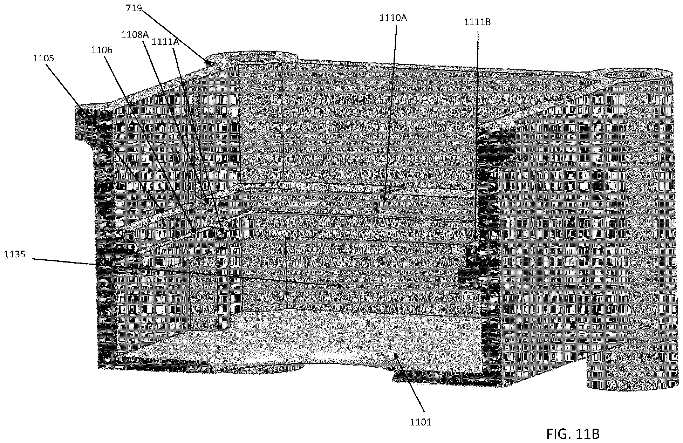

The electronics housing 220 is disposed on top of the shroud 718. The electronics housing 220 may comprise an open ended box 719 that houses an electronics module 728 and a cover 730 that closes the box 719 of the electronics housing 220 to secure the electronics module 728 in electronics housing 220. The electronics module 728 may include a metallic module housing having an open end that receives a printed circuit board (PCB) with electronic and electrical components such as a processor, a memory, and field effect transistors for controlling the electric motor 205, and a bottom end that forms a heat sink for the PCB. The electronics housing 220 also includes a plurality (e.g., four) posts 731 through which fasteners 732 (e.g., screws) discussed above are threaded to secure the electronics housing 220, the shroud 718, and the lower plate 704 together. The cover 730 includes a plurality of openings 734 (e.g., slots) to provide for air flow from outside of the electronics housing 220 through the electronics housing 220 to cool and to dissipate heat from the electronics module 728 and out an opening in the bottom of the electronics housing 220. In some examples, the height, HC, of the cover 730 is in a range of approximately 140mm to 180mm. In some examples, the width, WC, of the cover 730 is in a range of approximately 80mm-120mm. The electronics housing 220 and the electronics module 728 are discussed in more detail below in FIGS. 11-21.

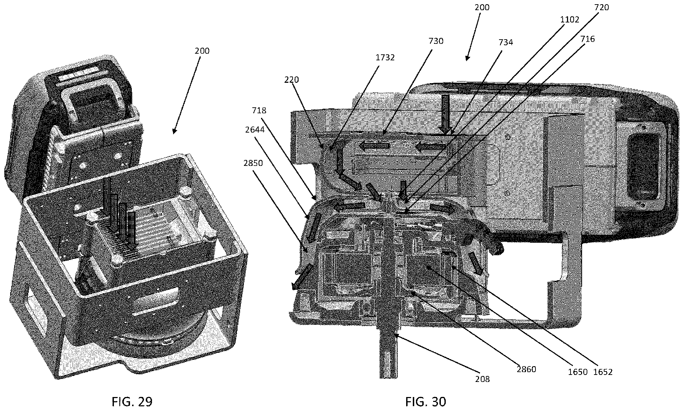

In general, during use and operation, the first fan 716 rotates with the rotation of the second end 714 of the output shaft 208. The first fan 716 pulls air in through openings 734 (e.g., slots or vents) in the cover 730. The air flows through the electronics housing 220 around the electronics module 728 housing the electronics and out of an opening at the bottom of the electronics housing 220 and through the opening 720 at the top of the shroud 718. The opening at the bottom of the electronics housing 220 is best seen, for example, in FIG. 11A, as discussed below. The shroud 718 distributes the air around an entirety (e.g., 360°) or about a portion of the outer surface of the outer housing 702. The air is exhausted through one or more vents, spaces, or openings 722 formed between a bottom 724 of the shroud 718 and a lower rim 726 of the outer housing 702. In this manner, the first fan 716 and the shroud 718, along with the electronics housing 220, work together to cool and dissipate heat from the electronics within the electronics housing 220 and the electric motor 205. Additional details regarding the air flow and the heat dissipation and cooling features are discussed below in FIGS. 29 and 30.

FIGS. 11A-21 illustrate examples and features related to the electronics housing 220 and the electronics module 728. FIG. 11A is a top view of the electronics housing 220 of FIGS. 2-10. FIG. 11B is a side, partial cutaway perspective view of the open box 719 of the electronics housing 220 of FIG. 11A.

FIG. 11A illustrates some features and example dimensions of the electronics housing 220 related to an area that holds the electronics module 728. As noted in the discussion above, the electronics housing 220 includes an opening 1102 in a bottom 1101 of the electronics housing 220 to enable an air flow path through the electronics housing 220 to dissipate heat and to cool the electronics module 728. In this example, the diameter, D1, of the opening 1102 is in a range of approximately 35mm-45mm. In other examples, the diameter of the opening 1102 may be other sizes.

The electronics housing 220 includes a first lip 1105 and a second lip 1106 that are sized to fit the electronics module 728. The first lip 1105 and the second lip 1106 are raised above the bottom 1101 of the electronics housing 220 that includes the opening 1102. The first lip 1105 and the second lip 1106 are offset with respect to one another with the second lip 1106 being wider than the first lip 1105 around an inner circumference of the box 719. The first lip 1105 and the second lip 1106 form ledges or ledge supports on which the electronics module 728 sits. The first lip 1105 is defined by an area having a width, W1, in a range of approximately 95mm-105mm and a height, H1, in a range of approximately 75mm-85mm. The height of the electronics housing 220 wall, H2, is approximately 50mm-60mm. In other examples, the first lip 1105 may be sized differently to accommodate a corresponding size of the electronics module 728.

The first lip 1105 includes one or more slots (e.g., four slots 1108A, 1108B, 1110A, and 1110B) that align with one or more corresponding tabs on the electronics module 728 to align and/or secure the electronics module 728 in the electronics housing 220. One of the four slots 1108A, 1108B, 1110A, and 1110B may be in each of the sides of the first lip 1105. That is, each side of the first lip 1105 includes a slot. The slots 1108A and 1108B are the same size and the slots 1110A and 1110B are slightly different sizes.

The second lip 1106 includes two slots with slot 1111A visible in the figure. The other slot is in a same relative position with respect to slot 1108B in the first lip 1105 as the slot 1111A with respect to slot 1108A.

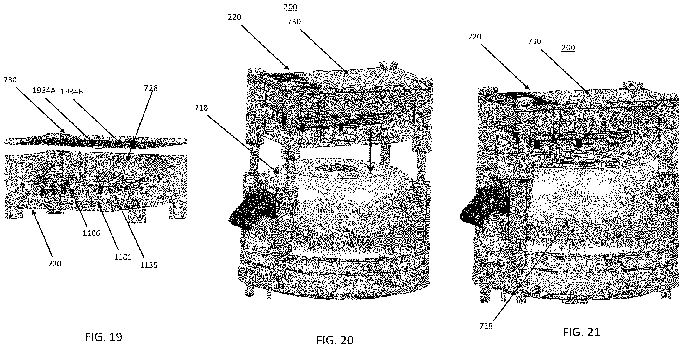

The area between the first lip 1105 and the second lip 1106 and the bottom 1101 form a gap 1135 to allow air flow to circulate to dissipate the heat from the electronics module 728 and to cool the electronics module 728. The gap 1135 is best seen in FIG. 11B and in FIGS. 19-21.

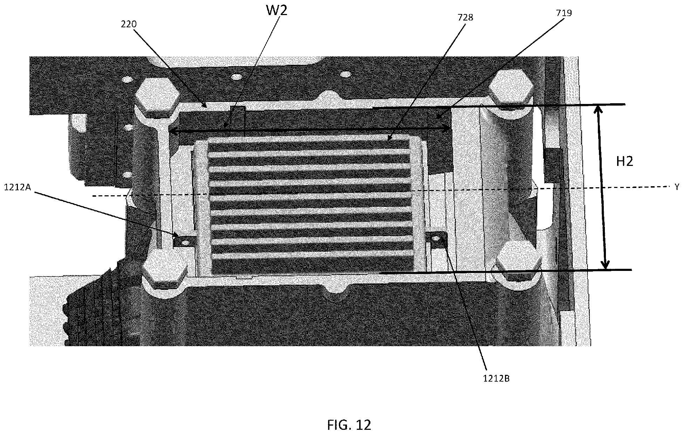

FIG. 12 is a top view of the electronics housing 220 with the electronics module 728 inserted in the electronics housing 220. The electronics housing 220 has an approximate opening width, W2, in a range of approximately 120mm-125mm and an approximate opening height, H2, in a range of approximately 80mm-90mm. As seen in this view, the electronics module 728 includes a tab 1212A and a tab 1212B that fit into the slots 1108A and 1108B.

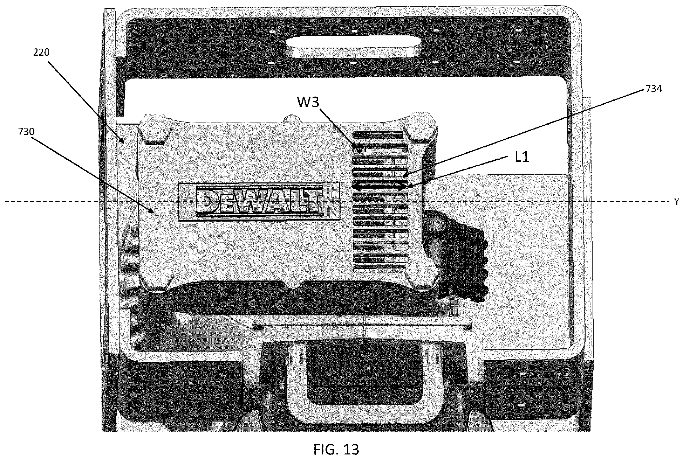

FIG. 13 is a top view of the cover 730 of the electronics housing 220 illustrating the dimensions of the plurality of openings 734 in the cover 730. The plurality of openings 734 include approximately 12 openings. In other examples, the plurality of openings 734 may include more or fewer openings. The plurality of openings 734 may be oval or rectangular in shape and include an approximate length, L1, in a range of approximately 30mm-35mm and an approximate width, W3, in a range of approximately 2mm-6mm. The plurality of openings 734 enable air that is external to the electronics housing 220 to enter through the openings 734 and to flow into the electronics housing 220. The air flow circulates within the electronics housing 220 and dissipates the heat and cools the electronics module 728. The openings 734 extend parallel to an axis Y that is generally perpendicular to an axis X of the output shaft 208 and parallel to a long side of the electronics housing 220.

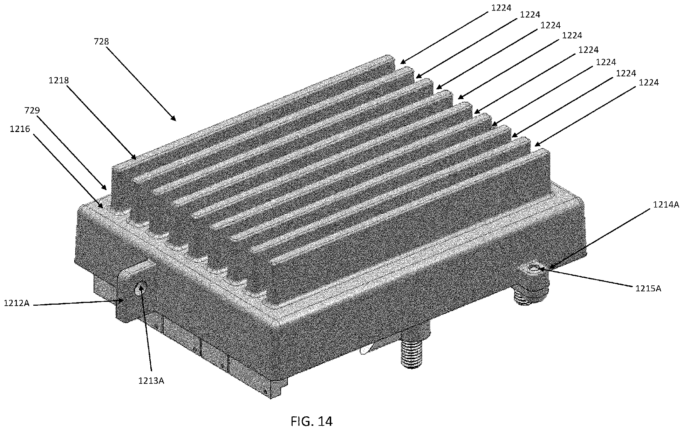

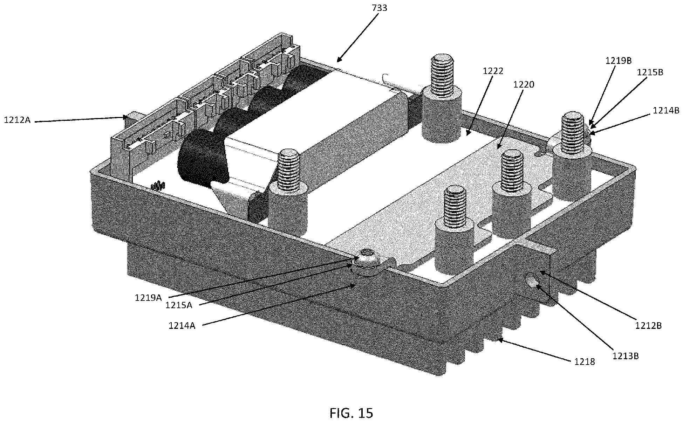

FIG. 14 is a bottom perspective view of the electronics module 728. FIG. 15 is a top perspective view of the electronics module 728. FIG. 16 is a cross section view of the electric motor system 200 illustrating the electronics module 728, the shroud 718, and the first fan 716. The electronics module 728 is rectangular in shape. The electronics module 728 includes a bottom end 729 (FIG. 14) and an open end 733 (FIG. 15).

The electronics module 728 includes a plurality (e.g., four) of tabs 1212A, 1212B, 1214A, and 1214B. The tabs 1212A and 1212B protrude in a perpendicular direction from an exterior surface of the electronics module 728. The tabs 1212A and 1212B may each include an opening 1213A and 1213B, respectively. The tabs 1214A and 1214B protrude from an exterior surface of the electronics module 728. The tabs 1214A and 1214B each include an opening 1215A and 1215B, respectively. The openings 1215A and 1215B may each receive a fastener 1219A and 1219B that fastens a heat sink 1220. In this manner, the heat sink 1220 may dissipate heat from the electronics on the PCB 1222 directly to the electronics module 728, which also functions as a heat sink.

The bottom end 729 of the electronics module 728 includes a surface 1216 from which multiple fins 1218 protrude perpendicular to the surface 1216. The fins 1218 extend longitudinally along a length of the surface 1216 parallel to the axis Y. That is, the fins 1218 project from the surface 1216. In one example, the electronics module 728 includes nine fins 1218. In other examples, the electronics module 728 may include more or fewer fins 1218. There is a gap 1224 between adjacent fins to provide a path for air flow through the fins 1218. The open end 733 of the electronics module 728 receives the PCB 1222. The electronics module 728 dissipates heat from the electronics on the PCB 1222 through the fins 1218. The fins 1218 also may dissipate the heat from the heat sink 1220 through the tabs 1214A and 1214B.

As seen in FIG. 16, the fins 1218 may be approximately equally spaced apart from each other by the gap 1224. In some examples, the gap 1224 between the fins 1218 is in a range of approximately 2.5mm-5mm measured at the bottom 1226 of the fins 1218. The gap 1224 between the fins 1218 is in a range of approximately 3.5mm-5.5mm measured at the top 1228 of the fins 1218. In other examples, the gap 1224 between the fins 1218 may be different distances. The thickness of each of the fins 1218 at the bottom 1226 of the fins 1218 is in a range of approximately 3mm-5mm and the thickness of each of the fins 1218 at the top 1228 of the fins 1218 is in a range of approximately 2mm-4mm.

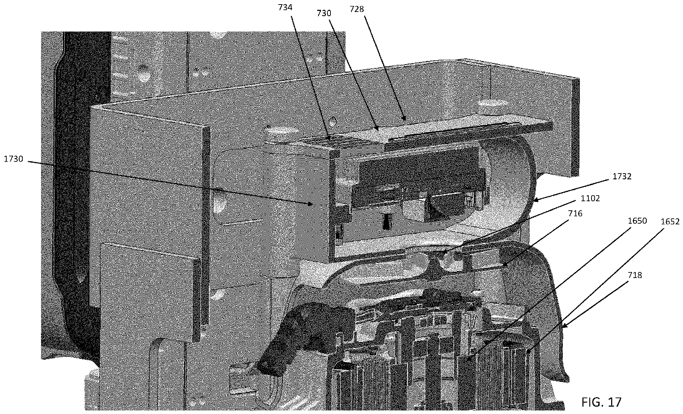

FIG. 17 is a perspective cross section of a portion of the electric motor system 200 illustrating the electronics module 728, the shroud 718, and the first fan 716. The electronics module 728 includes a sidewall 1730 and a sidewall 1732. The sidewall 1730 forms a straight vertical wall. The electronics module 728 and the openings 734 in the cover 730 are disposed closer to sidewall 1730 than to sidewall 1732. The sidewall 1732 is curved to allow for smooth or laminar air flow through the electronics module 728. In operation, the first fan 716 rotates and pulls external air through the openings 734 in the cover 730. The air flows between the gap 1224 between each of the fins 1218 toward the sidewall 1732 and then downward through the opening 1102. FIG. 30 discussed below illustrates the air flow path.

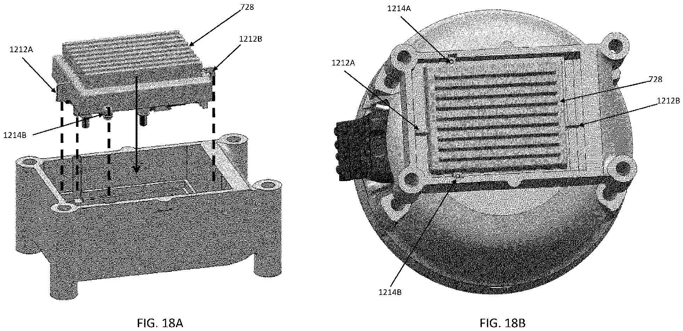

FIG. 18A is a perspective view of the electronics module 728 being assembled in the electronics housing 220. FIG. 18B is a top view of the electronics module 728 in the electronics housing 220 on top of the shroud 718. The tabs 1212A, 1212B, 1214A, and 1214B on the electronics module 728 are aligned with the corresponding slots 1108A, 1108B, 1110A, and 1110B on the electronics housing 220 and the electronics module 728 is dropped into the electronics housing 220. The four tabs 1212A, 1212B, 1214A, and 1214B sit in the four corresponding slots 1108A, 1108B, 1110A, and 1110B in the first lip 1105 to prevent the electronics module 728 from moving within the electronics housing 220. Additionally, the tabs 1212A and 1212B sit in corresponding slots 1111A and 1111B in the second lip 1106.

FIG. 19 is a side partially transparent view of the electronics housing 220 with the cover 730 above the electronics housing 220. FIG. 20 is a perspective view of the electric motor system 200 without the fan and illustrating a partially transparent view of the electronics housing 220 above the shroud 718. FIG. 21 is a perspective view of the electric motor system 200 without the fan and illustrating a partially transparent view of the electronics housing 220 secured to the shroud 718.

FIG. 19 illustrates that the cover 730 includes two ribs, a rib 1934A and a rib 1934B on the underside of the cover 730. The rib 1934A and the rib 1934B assist in holding the electronics module 728 in place in the electronics housing 220 with slight pre-loading after assembling the electronics module 728 in the electronics housing 220, as discussed above. As discussed above, a gap 1135 is best seen in FIG. 19. The gap 1135 is an area between the bottom 1101 of the electronics housing 220 and the first lip 1105 and the second lip 1106 to allow for air flow around the electronics module 728. In FIG. 20, the electronics housing 220 is shown being assembled and disposed on the top of the shroud 718. In FIG. 21, the electronics housing 220 is shown as assembled on the top of the shroud 718.

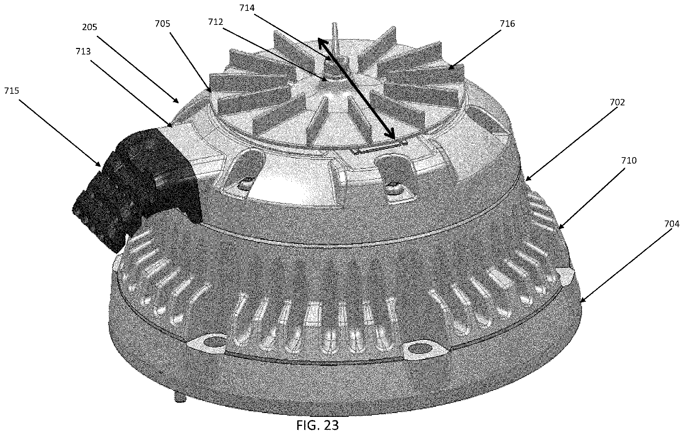

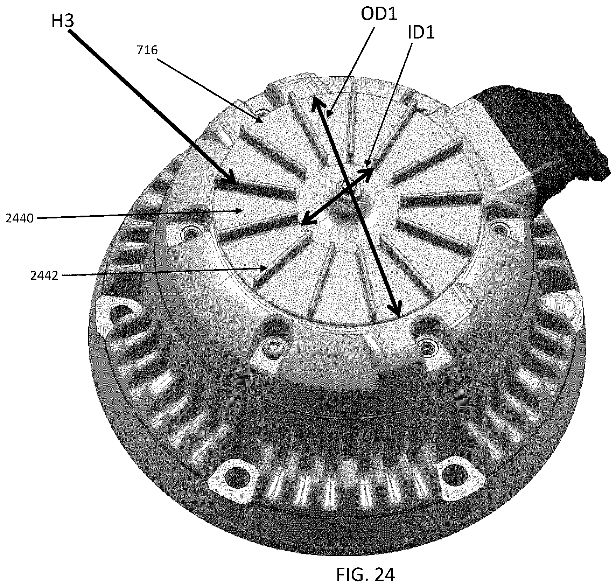

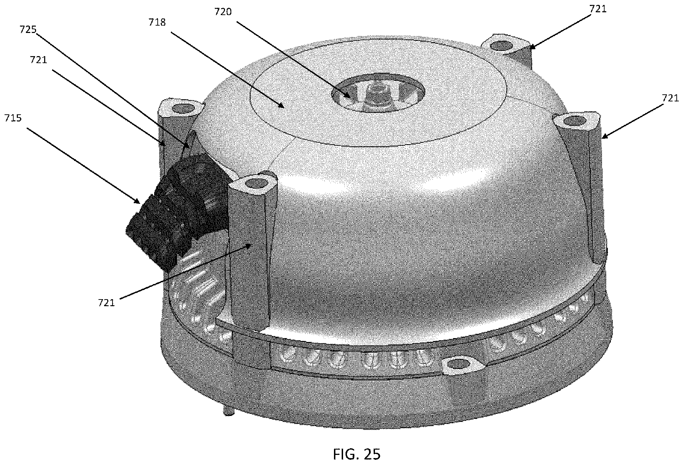

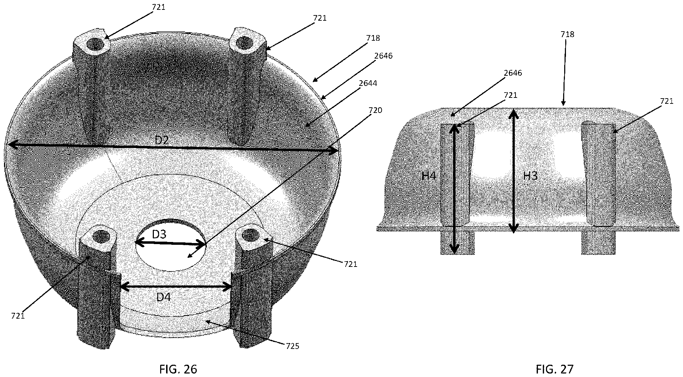

FIGS. 22-27 illustrate details of the electric motor 205, the first fan 716, and the shroud 718. FIG. 22 is a perspective top view of the electric motor 205. FIG. 23 is a perspective top view of the electric motor 205 with the first fan 716 attached. FIG. 24 is a perspective top view of the electric motor 205 with the first fan 716 attached. FIG. 25 is a perspective top view of the electric motor 205 and the first fan 716 with the shroud 718. FIG. 26 is a bottom view of the shroud 718. FIG. 27 is a side view of the shroud 718.

As discussed above, the electric motor 205 is a fully sealed motor including the outer housing 702 that mates with the lower plate 704. The electric motor 205 includes the motor cover 705 that is secured to the outer housing 702. The motor cover 705 together with the outer housing 702 and the lower plate 704 form a water-sealed containment around the other motor components that are disposed within the outer housing 702. The motor cover 705 protects motor power and signal wiring connections and other motor components against ingress of water and contaminated air. Together the outer housing 702, the lower plate 704, and the motor cover 705 form a motor housing.

The motor cover 705 includes a grommet 713 and a strain relief 715. The grommet 713 captures the strain relief 715, which is coupled to the motor cover 705 through the grommet 713. A wire cord (not shown) is captured by the strain relief 715 at a point of exit from the outer housing 702.

The fins 710 are located circumferentially around the outer housing 702 to dissipate the heat from the electric motor 205. The second end 714 of the output shaft 208 protrudes through the opening 712 of the motor cover 705. As seen in FIG. 23, the first fan 716 is attached to the second end 714 of the output shaft 208 on top of the motor cover 705. The second end 714 of the output shaft 208 imparts rotational motion to the first fan 716. The first fan 716 rotates and generates air flow. The rotation of the first fan 716 pulls external air towards the top of the motor cover 705.

As seen in FIG. 24, the first fan 716 includes a plate 2440 that is circular in shape with multiple radially extending blades 2442 disposed on the plate 2440. In some examples, the first fan 716 includes thirteen blades 2442, as illustrated. Each of the multiple blades 2442 may have a height, H3, in a range of approximately 6mm-10mm. In other examples, the first fan 716 may include more or fewer blades 2442 and the blades may be curved. In this example, the first fan 716 includes an outer diameter, OD1, in a range of approximately 105mm-120mm and an inner diameter, ID1, in a range of approximately 35mm-45mm.

FIGS. 25-27 illustrates additional details of the shroud 718. The shroud 718 is a dome-shaped cover that works in combination with the first fan 716 to provide an air flow around an entirety (e.g., 360°) or about a portion of the outer housing 702 of the electric motor 205 to provide cooling to the electric motor 205. As noted above, when the first fan 716 rotates, air is drawn through the opening 720 of the shroud 718. As seen in FIG. 26, the shroud 718 includes an inner surface 2644 and an outer surface 2646. The inner surface 2644 includes a diameter, D2, in a range of approximately 185mm-215mm. The opening 720 includes a diameter, D3, in a range of approximately 35mm-45mm and may correspond so that the inner diameter ID1 of the first fan 716 is approximately equal to the diameter D3 of the opening 720. The distance, D4, in the cutout region 725 is in a range of approximately 60mm-80mm. As seen in FIG. 27, the height, H3, of the outer surface 2646 is in the range of approximately 75mm-85mm. The height, H4, of the four posts 721 is in the range of approximately 80mm-90mm each. In some examples, the dimensions of the shroud 718 may be different and from those illustrated here.

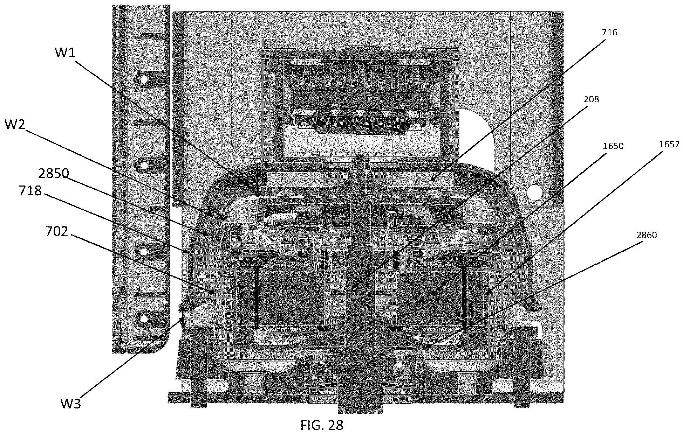

FIG. 28 is cross section view of the electric motor system. FIG. 29 is a top perspective view of the electric motor system in the frame with the cover for the electronics housing removed. FIG. 30 is a cross section view of the electric motor system illustrating the air flow.

FIG. 28 illustrates a gap 2850 between the shroud 718 and the outer housing 702. The gap 2850 also may be referred to as a space. The gap 2850 provides an area for the air flow to circulate between the shroud 718 and the outer housing 702 of the electric motor 205. The gap 2850 may have different gap distances at different locations. For example, the gap 2850 may have a distance W1 at a location between the shroud 718 above the motor cover 705. The gap 2850 may have a distance W2 at a location between the shroud 718 around the top of the outer housing 702. The gap 2850 may have a distance W3 at a location between the shroud 718 near the bottom of the lower plate 704. In some examples, the distance of W1 is greater than the distance of W2. In some examples, the distance of W3 is also greater than the distance of W2, but the distance of W3 is less than the distance of W1. In some examples, the distance W1 is in a range of approximately 16mm-22mm, the distance W2 is in a range of approximately 8mm-16mm, and the distance W3 is in a range of approximately 12mm-20mm.

FIG. 29 and FIG. 30 illustrates the air flow path through the electric motor system 200. The arrow in FIG. 29 points to the approximate location where external air is pulled into the electronics housing 220 through the cover 730 (not shown in FIG. 29). Referring to FIG. 30, when the first fan 716 rotates, external air is pulled in through the openings 734 of the cover 730. The air flow is directed across the fins 1218 and through the gap 1224 between the fins 1218 of the electronics module 728 towards the sidewall 1732 of the electronics housing 220. The air flow exits the electronics housing 220 through the opening 1102 of the electronics housing 220 and into the opening 720 of the shroud 718. The air flow circulates 360 degrees around the inner surface 2644 of the shroud 718 in the gap 2850.

In some examples, the approximate air flow rate is 15cfm (0.0071 cubic meters/second) at a first fan 716 speed of 3600rpm. In some examples, the air flow rate may be different based on a different speed of the first fan 716 or other variables such as the size and number of blades on the first fan 716.

As noted above, FIGS. 16, 17, 29, and 30 illustrate some of the internal components of the electric motor 205, which is an example of a sealed, outer-rotor electric motor. The electric motor 205 includes a stator 1650 (or stator assembly) and a rotor 1652 (or rotor assembly). The stator 1650 is provided as an inner stator including a stator lamination stack (also referred to as a stator core) having a ring-shaped stator bore with slots formed therebetween. Stator windings are wound around the stator teeth defining the phases of the electric motor 205. The rotor 1652 is provided as an outer-rotor that circumferentially surrounds the stator 1650 with a small airgap therebetween. The rotor 1652 supports a series of permanent magnets that magnetically interact with the stator windings causing a rotation of the rotor 1652 around the stator 1650 when the stator windings are sequentially energized. An output shaft 208 (also referred to as a motor spindle) is coupled to the rotor 1652 and the rotor 1652 imparts (or transmits) rotational motion to the output shaft 208.

Exterior to the electric motor 205 is the first fan 716 and the shroud 718. Interior to the electric motor 205 is a second fan 2860, as best seen in FIGS. 28 and 30. The second fan 2860 (also referred to as a flywheel) is coupled to the output shaft 208. The output shaft 208 imparts (or transmits) rotational motion to the second fan 2860, which provides air flow internal to the sealed electric motor 205 to cool the components of the electric motor 205.

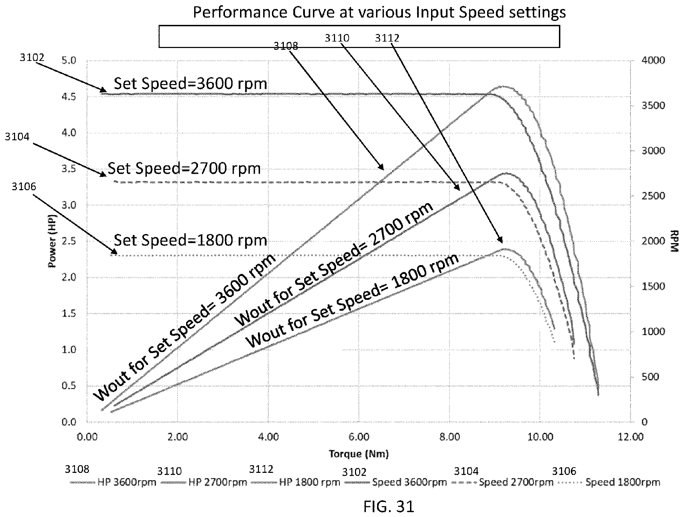

FIG. 31 is a graph illustrating a performance curve of the electric motor. The performance is presented through two different sets of characteristic curves, where the first set of curves 3102, 3104, and 3106 is a power output (horsepower) vs. torque (Nm) and the second set of curves 3108, 3110, and 3112 is the speed (RPM) vs. torque (Nm). Each of the curves are presented at three different operating points. The three different operating points are at different operating speeds: 3600rpm, 2700rpm, and 1800rpm. The plot displays electric motor output power measured in Horsepower (Primary Y-axis) Vs Torque produced by the electric motor (X-axis) in curves 3102, 3104, and 3106 and "Rotation Per minute, RPM (Secondary Y-axis) Vs Torque produced by the electric motor in Nm in curves 3108, 3110, and 3112. The electric motor is capable of operating at any speed between a lowest speed (for example, 1800 rpm) and highest speed (for example 3600 rpm) or any speed in between (for example 2700 rpm).

Additionally, the curves 3108, 3110, and 3112 illustrate that a closed loop constant speed operation is achieved through most of the torque range from approximately 0 Nm to 9 Nm. The curves 3108, 3110, and 3112 also illustrate the peak value of torque achieved at each of the three speed settings. As illustrated, the electric motor 205 is capable of variable speed operation at various speed through the approximate range of 1800 rpm to 3600 rpm. In some examples, a user may set the electric motor 205 to operate at a desired speed between the range of the 1800 rpm and 3600 rpm. In some examples, the electric motor 205 is capable of operating outside of the speed ranges at speeds slower than 1800 rpm (e.g., 500 rpm) and at speeds higher than 3600 rpm (e.g., 8000 rpm).

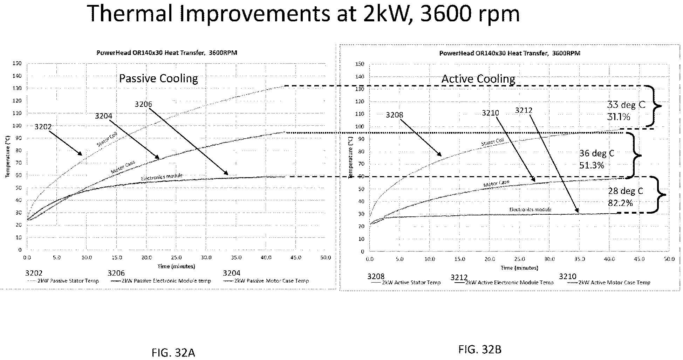

FIGS. 32A and 32B are graphs illustrating the thermal improvements of the electric motor system. The graph in FIG. 32A illustrates the thermal conditions for an electric motor with passive cooling, meaning that the electric motor does not include the first fan 716 and the shroud 718 and other cooling features described herein. The electric motor does include an internal second fan for cooling inside the motor housing. In FIG. 32A, three curves are illustrated for passive cooling of the stator coil 3202, the motor case 3204, and the electronics module 3206. The graph in FIG. 32B illustrates the thermal conditions for the electric motor system 200 at an operating point corresponding to continuous output power of 2000W at 3600 rpm, which includes the active cooling features of the first fan 716, the shroud 718, and other features. In FIG. 32B, three curves are illustrated for active cooling of the stator coil 3208, the motor case 3210, and the electronics module 3212. The temperature in degrees Celsius is on the Y-axis and the time in hours and minutes is on the X-axis. The graphs show the temperature of three different components over time: the stator coil 3202 and 3208, the motor case 3204 and 3210 or outer housing 702, and the electronics module 728 (3206 and 3212).

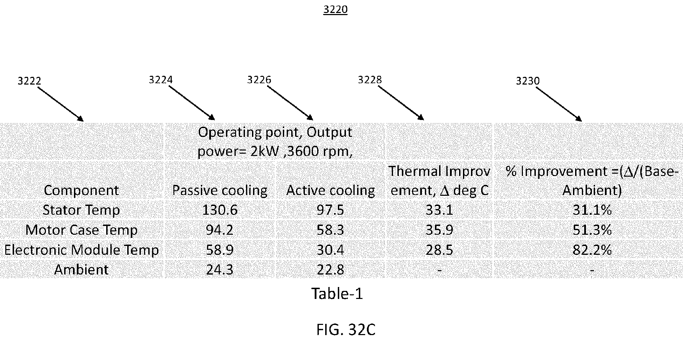

FIG. 32C illustrates a table 3220 that provides a statistical comparison of the motor component temperatures when cooled using passive cooling as illustrated in FIG. 32A and when cooled using active cooling as illustrated in FIG. 32B. The first column 3222 lists the motor components in the first three rows and the ambient temperature at the time of the test. The second column 3224 lists the temperature of the motor components in degrees C using passive cooling (FIG. 32A) at 2kW and 3600 rpm. The third column 3226 lists the temperature of the motor components in degrees C using active cooling (FIG. 32B) at 2kW and 3600 rpm. The fourth column 3228 lists the difference (Delta) between the temperatures in column two 3224 and column three 3226 in degrees C. The table 3220 shows that the active cooling provides lower temperatures of the motor components when compared to the passive cooling. Finally, the fifth column 3230 lists the percentage rise in temperature, where the percentage rise is equal to the Delta from column four 3228 divided by the difference between the base temperature minus the ambient temperature.

The graph in FIG. 32B illustrates the thermal improvement of the three components remaining at lower temperatures over time using the electric motor system 200 at an operating point corresponding to continuous output Power of 2000W at 3600 rpm when compared to the temperatures of the same components over time using just passive cooling. Specifically, the stator demonstrated a thermal improvement of 33 degrees Celsius, the motor case demonstrated a thermal improvement of 36 degrees Celsius, and the electronics module demonstrated a thermal improvement of 28 degrees Celsius. In this example, the testing parameters were limited to 2kW (2.7 HP) due to the temperature of the stator for the passive cooling.

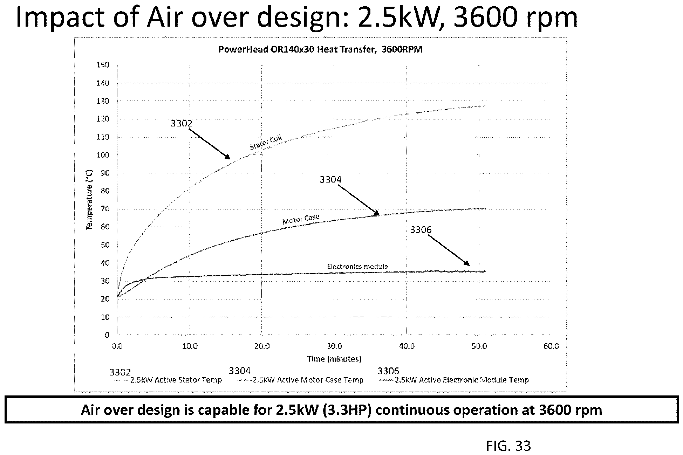

FIG. 33 is a graph illustrating the thermal improvement of the electric motor design. In FIG. 33, the thermal curves 3302, 3304, and 3306 are graphed for the same components as in FIGS. 32A and 32B. In this example, the parameters of the testing were not being compared to the passive cooling so the parameters were increased to show that the active cooling of the electric motor system 200 allows the system to run for 2.5kW (3.3 HP) continuous operation at 3600 rpm. This demonstrates that the electric motor system 200 may be run at higher power output for longer periods of time because the components are being cooled using the features described herein.

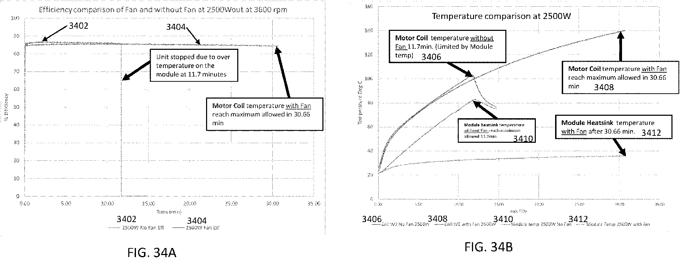

FIG. 34A is a graph illustrating the system efficiency of the electric motor system at a continuous operating point of 2500W output, while the electric motor is running at 3600 rpm. In FIG 34A, Y-axis is system efficiency and X-axis is Time in minutes. The curve 3402 for baseline test (no first fan 716) has slightly higher efficiency but the electric motor shuts down after 11.7 minutes due to the electronics module reaching its temperature protection limit. Curve 3404 shows that the electric motor with the first fan 716 has slightly lower efficiency (due to power used to drive the first fan 716) but much lower temperatures and it can run continuously for 30.6 minutes before reaching stator coil temperature limit. In both the cases, with and without the first fan 716, the tests were stopped when either the electronics module reaches 82 deg C or stator coil reached 140 deg C. FIG. 34B illustrates the temperature measurements for both these tests. The curve 3406 illustrates the motor coil temperature without the first fan 716 and curve 3408 illustrates the motor coil temperature with the first fan 716. The curve 3410 illustrates the electronics module 728 temperature without the first fan 716 and the curve 3412 illustrates the electronics module 728 with the first fan 716. In this case, electronics module 728 temperature limit was set at 82 degree C and stator coil limit at 140 deg C.

FIGS. 35A-45 illustrates various different configurations of the electric motor system 200 with regard to placement of a battery pack and battery pack receptacle and the type of motor shaft (e.g., horizontal shaft or vertical shaft). FIGS. 35A-35B are perspective views of are another embodiment of an electric motor system 3500. FIG. 35C is a side view of the electric motor system 3500 of FIG. 35A. FIG. 35D is a perspective view of a control module 3550 for the electric motor system 3500 of FIG. 35A. FIG. 35E is a schematic view of the electric motor system 3500 of FIG. 35A implemented on a power trowel 3560.

The electric motor system 3500 includes an electric motor 3505, a battery pack 3510, and a battery pack interface 3515. The electric motor system 3500 includes a shroud 3518 that covers the first fan (not shown) and the outer housing (not shown). The electric motor 3505 includes a first end 3508 of an output shaft 3513 that is coupled to the equipment, such as the power trowel 3560. The second end of the output shaft is not visible in these figures, but it couples to and drives the first fan to cool the electric motor 3505. The electric motor system 3500 and its components may function and include the same or similar features as the electric motor system 200 and its components, as described above.

In these figures, it is noted that various battery mounting locations are supported, as noted above in the discussion of FIGS. 2-6. The battery pack may have a design or configuration similar to the battery pack disclosed in U.S. Provisional Patent Application No. 63/520,315, filed August 17, 2023, titled "Battery Pack". The battery pack receptacle may have a design or configuration similar to the battery pack receptacle disclosed in U.S. Provisional Patent Application No. 63/584,755, filed September 22, 2023. An adaptor may be coupled to the battery pack receptacle to enable a different type of battery pack for be coupled to the battery pack interface. One such adaptor may have a design or configuration similar to the adaptor disclosed in U.S. Provisional Patent Application No. 63/520,317, filed August 17, 2023. The battery pack may be recharged by a charger, which may have a design or configuration similar to the charger disclosed in U.S. Provisional Patent Application No. 63/520,316, filed August 17, 2023.

On the power trowel 3560 example, the electric motor system 3500 is mounted by the trowel and the control module 3550 for controlling the electric motor system 3500 is located up the handle towards the user. A throttle control lever 3570 (which is part of the trowel powered by an internal combustion engine) may be coupled to the control module 3550 or control box by a cable and may interface with the control electronics similar to embodiments disclosed in U.S. Patent Application No. 15/806,426, filed November 8, 2017, titled "Configurable Motor System".

FIGS. 36A-36N illustrate various battery pack configurations on the electric motor system. FIG. 36A illustrates an example electric motor system 3600A. In this example, the electric motor system 3600A includes a single battery pack 3610A and a single battery pack interface 3615A attached to the frame 3611A. The frame 3611A supports the electric motor 3605A, the shroud 3618A, and the electronics housing 3620A.

FIG. 36B illustrates an example electric motor system 3600B. In this example, the electric motor system 3600B includes two battery packs 3610B1 and 3610B2 and two battery pack interfaces 3615B1 and 3615B2 attached to the frame 3611B. The frame 3611B supports the electric motor 3605B, the shroud (not visible), and the electronics housing (not visible). The output shaft 3608B is along the X-axis and the two battery packs 3610B1 and 3610B2 and two battery pack interfaces 3615B1 and 3615B2 are oriented along the Y-axis. The two battery packs 3610B1 and 3610B2 and two battery pack interfaces 3615B1 and 3615B2 are on different sides of the frame 3611B from each other.

FIG. 36C illustrates an example electric motor system 3600C. In this example, the electric motor system 3600C includes a single battery pack 3610C and a single battery pack interface 3615C attached to the frame 3611C. The frame 3611C supports the electric motor 3605C, the shroud 3618C, and the electronics housing (not visible). The electric motor system 3600C differs from the electric motor system 3600A of FIG. 36A in that the frame 3611C supporting the electric motor 3605C, including the output shaft 3608C are oriented in a different direction that is rotated 90 degrees relative to the single battery pack 3610C and the single battery pack interface 3615C attached to the frame 3611C.

FIG. 36D illustrates an example electric motor system 3600D. In this example, the electric motor system 3600D includes two battery packs 3610D1 and 3610D2 and two battery pack interfaces 3615D1 and 3615D2 attached to the frame 3611D. The frame 3611D supports the electric motor 3605D, the shroud (not visible), and the electronics housing (not visible). The output shaft 3608D is along the X-axis and the two battery packs 3610D1 and 3610D2 and two battery pack interfaces 3615D1 and 3615D2 are also oriented along the X-axis, which is different than the electric motor system 3600B of FIG. 36B. The two battery packs 3610D1 and 3610D2 and two battery pack interfaces 3615D1 and 3615D2 are on different sides of the frame 3611D from each other.

FIG. 36E illustrates a top perspective view of an electric motor system 3600E. FIG. 36F illustrates a bottom perspective view of the electric motor system 3600E. FIG. 36G illustrates the bottom perspective view of the electric motor system 3600E with the two battery packs 3610E1 and 3610E2 installed in the two battery pack interfaces 3615E1 and 3615E2. The electric motor system 3600E includes two battery packs 3610E1 and 3610E2 and two battery pack interfaces 3615E1 and 3615E2 attached to the frame 3611E and oriented in the same direction as output shaft 3608E. The frame 3611E supports the electric motor 3605E, the shroud 3618E, and the electronics housing 3620E. The two battery packs 3610E1 and 3610E2 and two battery pack interfaces 3615E1 and 3615E2 are on the same side of the frame 3611E next to each other.

In this example, the two battery pack interfaces 3615E1 and 3615E2 are a different type of interface than the battery pack interfaces 3615A, 3615B1, 3615B2, 3615C, 3615D1, and 3615D2. The two battery pack interfaces 3615E1 and 3615E2 are different because they accommodate a different type of battery pack. In this example, the battery packs 3610E1 and 3610E2 may each be capable of multiple different voltages (e.g., 20V and 60V) with the DEWALT FLEXVOLT^{®} battery packs, e.g., Model No. DC8609 sold by DeWalt Industrial Tool Co., and disclosed in U.S. Patent No. 9583745, as one example.

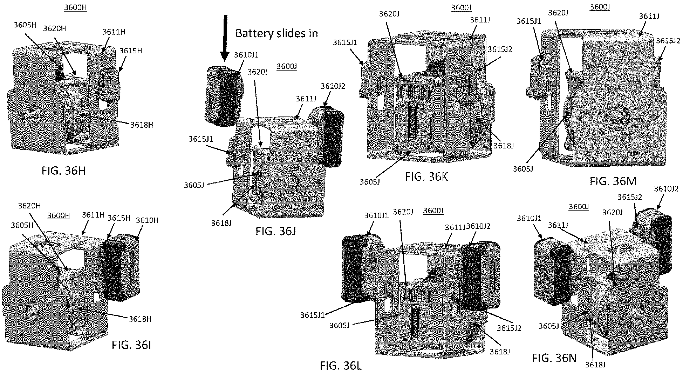

FIG. 36H illustrates a bottom perspective view of an electric motor system 3600H without a battery pack. FIG. 36I illustrates a bottom perspective view of the electric motor system 3600H with a battery pack. In this example, the electric motor system 3600H includes a single battery pack 3610H and a single battery pack interface 3615H attached to the frame 3611H. The frame 3611H supports the electric motor 3605H, the shroud 3618H, and the electronics housing 3620H. The battery pack interface 3615H is the same battery pack interface as 3615E1 and 3615E2 to support a battery pack 3610H capable of multiple voltages (e.g., 20V and 60V).

FIG. 36J illustrates a bottom perspective view of the electric motor system 3600J with two battery packs and shows how the battery pack slides into the battery pack interface. FIG. 36K illustrates a top perspective view of the electric motor system 3600J without battery packs and FIG. 36L illustrates a top perspective view of the electric motor system 3600J with the battery packs. FIG. 36M illustrates a bottom perspective view of the electric motor system 3600J without battery packs 3610J1 and 3610J2 and FIG. 36N illustrates a bottom perspective view of the electric motor system 3600J with the battery packs 3610J1 and 3610J2.

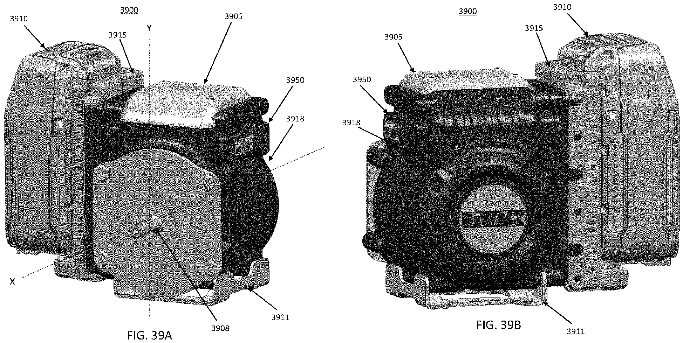

The electric motor system 3600J includes two battery packs 3610J1 and 3610J2 and two battery pack interfaces 3615J1 and 3615J2 attached to the frame 3611J. The frame 3611J supports the electric motor 3605J, the shroud 3618J, and the electronics housing 3620J. The two battery packs 3610J1 and 3610J2 and two battery pack interfaces 3615J1 and 3615J2 are on the different sides of the frame 3611J from each other. The battery pack interfaces 3615J1 and 3615J2 are the same battery pack interfaces as 3615E1 and 3615E2 to support battery pack 3610J1 and 3610J2 capable of multiple voltages (e.g., 20V and 60V). These examples may be further illustrated below in FIGS. 39A-45.

FIG. 37 is bottom view of the frame for the electric motor system. FIG. 38 is a bottom perspective view of the frame for the electric motor system. FIGS. 37 and 38 illustrate that the electric motor system 200, including the frame 225 and the bolt patterns 3710 on the frame 225 match the bolt patterns and output shaft for internal combustion engine (e.g., a Honda GX120 engine). In this manner, the internal combustion engine can be removed from the equipment and the electric motor system 200 may be installed using the same bolt holes and bolt patterns to secure the electric motor system 200 to the equipment.

FIG. 39A is a bottom perspective view of an electric motor system 3900 with the battery pack 3910 on the side oriented parallel to the Y-axis. FIG. 39B is a top perspective view of the electric motor system 3900 with the battery pack 3910 on the side oriented parallel to the Y-axis. The electric motor system 3900 includes the battery pack 3910 and a battery pack interface 3915 attached to the frame 3911. The frame 3911 supports the electric motor 3905, the shroud 3918, and a control module 3950. The electric motor 3905 imparts rotational motion to an output shaft 3908 to drive equipment on which the electric motor system 3900 is attached. In this example, the output shaft 3908 and the control module 3950 are oriented parallel to the X-axis and perpendicular to the Y-axis and the battery pack 3910.

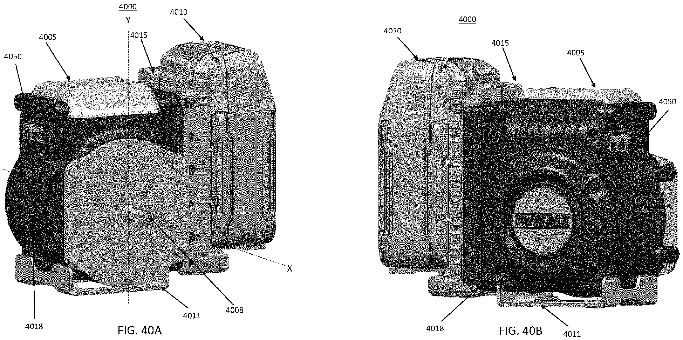

FIG. 40A is a bottom perspective view of an electric motor system 4000 with the battery pack 4010 on the side oriented parallel to the Y-axis. FIG. 40B is a top perspective view of the electric motor system 4000 with the battery pack 4010 on the side oriented parallel to the Y-axis. The electric motor system 4000 includes the battery pack 4010 and a battery pack interface 4015 attached to the frame 4011. The frame 4011 supports the electric motor 4005, the shroud 4018, and a control module 4050. The electric motor 4005 imparts (or transmits) rotational motion to an output shaft 4008 to drive equipment on which the electric motor system 4000 is attached. In this example, the output shaft 4008 and the control module 4050 are oriented parallel to the X-axis and perpendicular to the Y-axis and the battery pack 4010. The electric motor system 4000 differs from the electric motor system 3900 in that the battery pack interface 4015 and the battery pack 4010 are on a different side of the frame 4011 than the battery pack interface 3915 and the battery pack 3910. This demonstrates the flexibility of being able to place the battery pack interface battery pack interface 4015 and the battery pack 4010 on either side of the frame 4011.

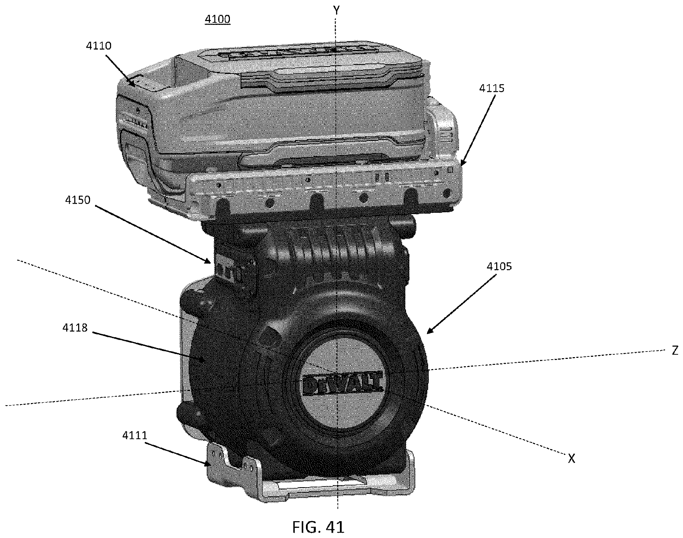

FIG. 41 is a top perspective view of the electric motor system 4100 with the battery pack 4110 on the top of the frame 4111. The electric motor system 4100 includes the battery pack 4110 and a battery pack interface 4115. The frame 4111 supports the electric motor 4105, the shroud 4118, and a control module 4150. The electric motor 4105 imparts rotational motion to an output shaft (not shown) to drive equipment on which the electric motor system 4100 is attached. In this example, the output shaft and the control module 4050 are oriented parallel to the X-axis and perpendicular to the Y-axis. The battery pack 4110 and the battery pack interface 4115 are oriented in the Z-axis.

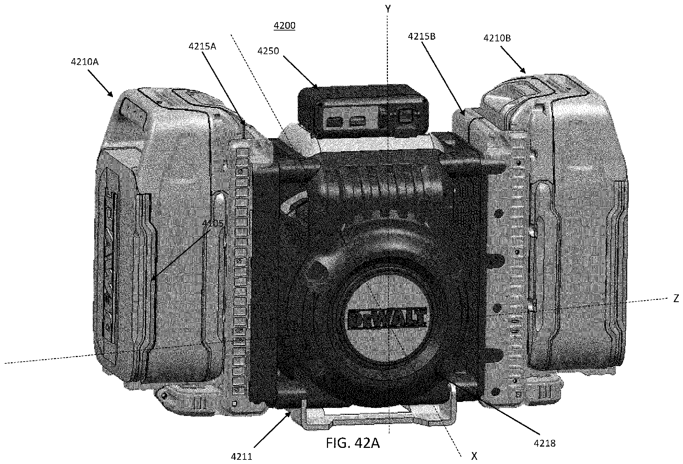

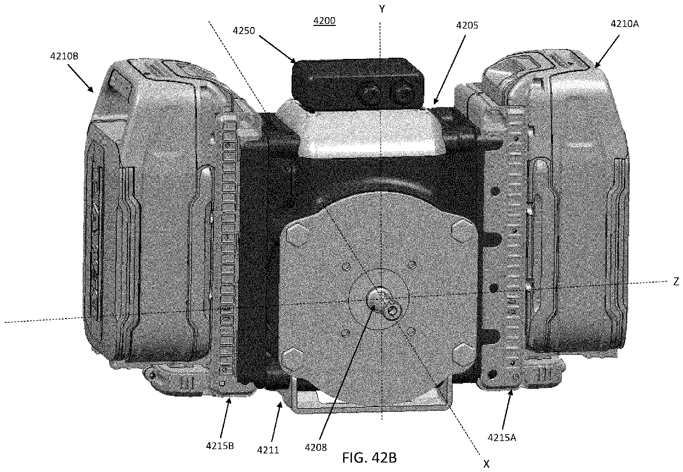

FIG. 42A is a top perspective view of the electric motor system 4200 with two battery packs 4210A and 4210B. FIG. 42B is a bottom perspective view of the electric motor system with two battery packs 4210A and 4210B. The electric motor system 4200 includes the battery packs 4210A and 4210B and battery pack interfaces 4215A and 4215B attached to the frame 4211. The frame 4211 supports the electric motor 4205, the shroud 4218, and a control module 4250. The electric motor 4205 imparts (or transmits) rotational motion to an output shaft 4208 to drive equipment on which the electric motor system 4200 is attached. In this example, the output shaft 4208 is oriented parallel to the X-axis and perpendicular to the Y-axis and the battery packs 4210A and 4210B. The control module 4250 is oriented in a direction along the Z-axis.

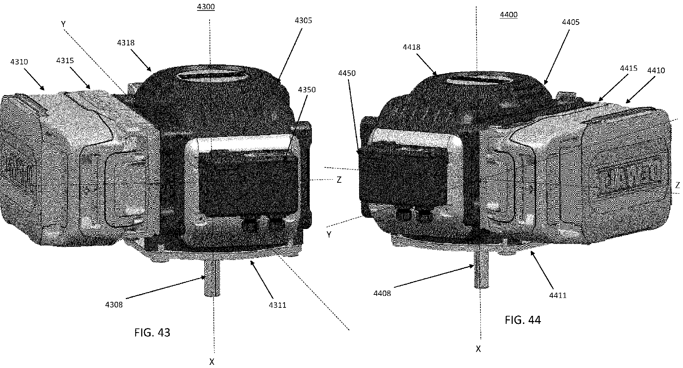

FIG. 43 is a side perspective view of an example electric motor system 4300 having a shaft 4308 oriented parallel to the X-axis and a battery pack 4310 and a battery pack interface 4315 oriented parallel to the Y-axis and perpendicular to the X-axis. The electric motor system 4300 includes an electric motor 4305, a shroud 4318, the battery pack interface 4315, the battery pack 4310, and a control module 4350, all of which are supported by a frame 4311. The control module 4350 is oriented along the Z-axis.

FIG. 44 is a side perspective view of an example electric motor system 4400 having a shaft 4408 oriented parallel to the X-axis and a battery pack 4410 and a battery pack interface 4415 oriented parallel to the Y-axis and perpendicular to the X-axis. The electric motor system 4400 includes an electric motor 4405, a shroud 4418, the battery pack interface 4415, the battery pack 4410, and a control module 4450, all of which are supported by a frame 4411. The control module 4450 is oriented along the Z-axis. The electric motor system 4400 differs from the electric motor system 4300 in that the battery pack 4410 and the battery pack interface 4415 are on opposites sides of the frame 4411 when compared to the battery pack 4310 and the battery pack interface 4315.

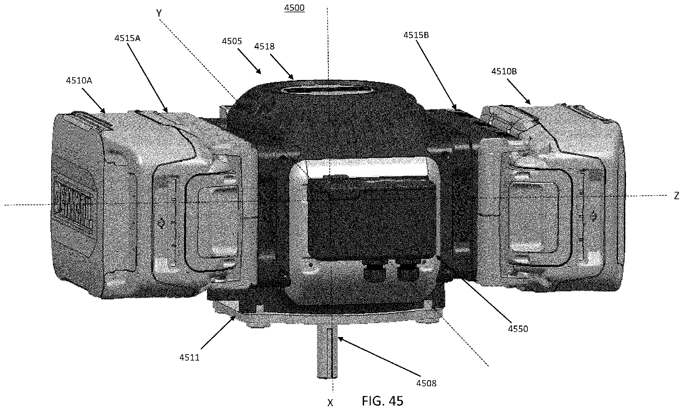

FIG. 45 is a side perspective view of an example electric motor system 4500 two battery packs 4510A and 4510B and two battery pack interfaces 4515A and 4515B. The electric motor system 4500 includes an electric motor 4505, a shroud 4518, the battery pack interfaces 4515A and 4515B, the battery packs 4510A and 4510B, and a control module 4550, all of which are supported by a frame 4511. The electric motor 4505 includes a shaft 4508 oriented parallel to the X-axis. The battery packs 4510A and 4510B and the battery pack interfaces 4515A and 4515B are oriented parallel to the Y-axis and perpendicular to the X-axis. The control module 4550 is oriented along the Z-axis.

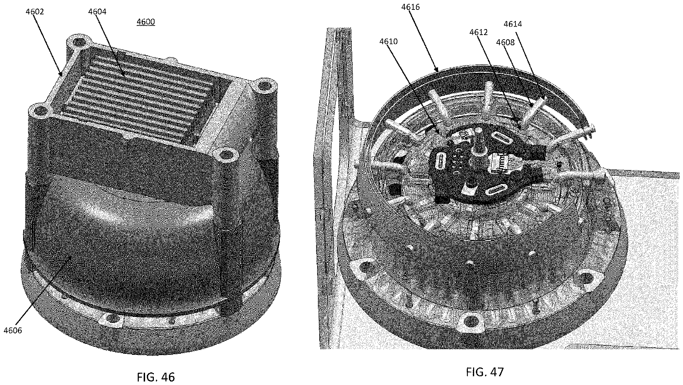

FIG. 46 is a top perspective view of another example of an electric motor system 4600. In this example, the electric motor system 4600 includes an electronics housing 4602 housing an electronics module 4604, where the electronics housing 4602 is mounted to a shroud 4606. A fan (not visible in FIG. 46) is mounted on a top of the outer housing for the motor. The electronics housing 4602, the electronics module 4604, and the shroud 4606 include the same features and functions as the electronics housing 220, electronics module 728, and the shroud 718, as described above.

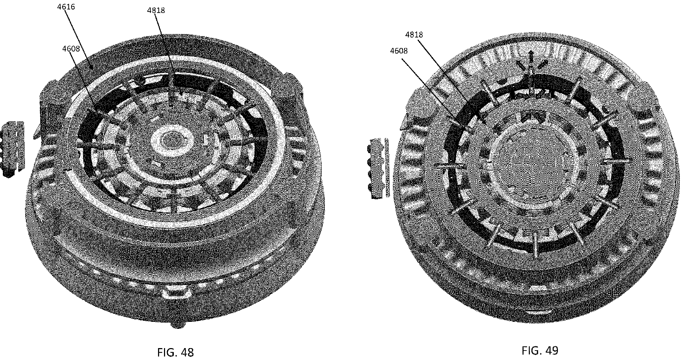

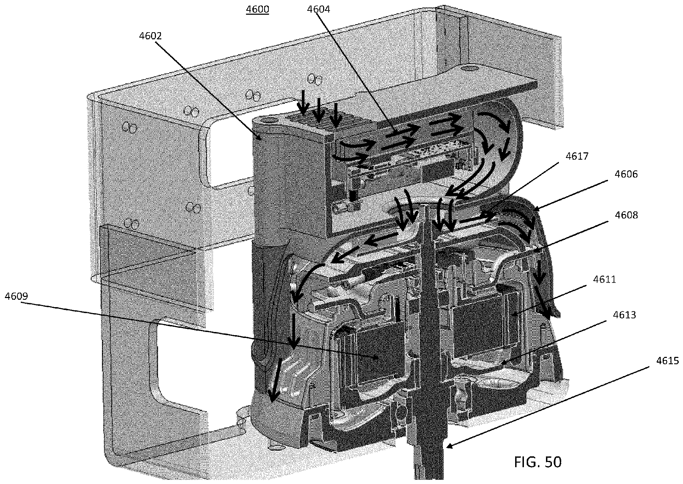

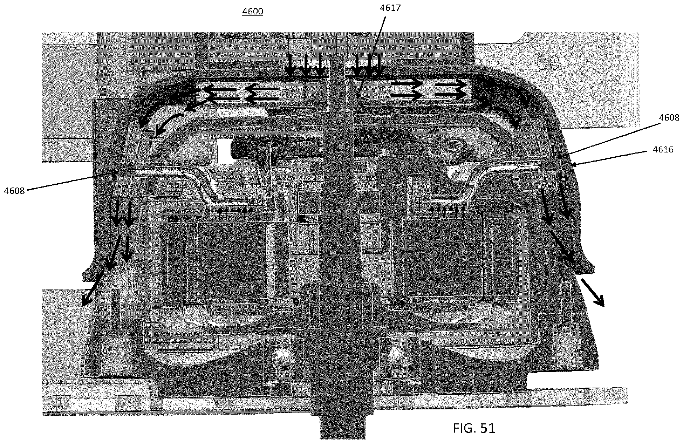

FIG. 47 is top perspective view of the electric motor system 4600 of FIG. 46 with a partial cut away of the shroud 4606 and the motor cover. FIG. 48 is a top cross section view of the electric motor system 4600 of FIG. 46. FIG. 49 is a top cross section view of the electric motor system 4600 of FIG. 46. FIG. 50 is a side perspective cross section view of the electric motor system 4600 of FIG. 46 illustrating the air flow path. FIG. 51 is a side cross section view of the electric motor system of FIG. 46 illustrating the air flow path.

In this example, a series of heat pipes 4608 are utilized to cool the electric motor 4610. The electric motor 4610 includes a stator 4609 and a rotor 4611 that is an outer rotor surrounding the stator 4609. An output shaft 4615 is coupled to the rotor 4611 and the output shaft 4615 drives the first fan 4617 and the second fan 4613, where the second fan 4613 is internal to the sealed electric motor 4610. The heat pipes 4608 are hollow pipes with a coolant in them. In some examples, the heat pipes 4608 are made of a heat transferable material such as aluminum. In other examples, the heat pipes 4608 may be made of a different heat transferable material. In some examples, the coolant used in the heat pipes 4608 is water. In other examples, a different coolant may be used.

The heat pipes 4608 include a first end 4612 and a second end 4614. The first end 4612 may be connected to a component of the electric motor 4610, such as the stator 4609. The second end 4614 may be in contact with an inner wall of the outer housing 4616 or may penetrate through an opening in the outer housing 4616 of the electric motor 4610. In this manner, the second end 4614 may be exposed to the air flow between the outer housing 4616 and the shroud 4606. In some examples, twelve heat pipes 4608 may be used. In other examples, a different number of heat pipes 4608 may be used.

In operation, the coolant evaporates as it gets hot at the first end 4612 and evaporates as it comes into contact with cooling air at the second end 4614. The first end 4612 may be in contact with stator coils via a silicone pad to avoid electrical shortage. The second end 4614 is in contact with a metal part of the outer housing 4616 and/or penetrates out of the outer housing 4616 in direct contact with cooling air.

FIGS. 48 and 49 illustrates a thermal pad ring 4818 that may be used to retain the heat pipes 4608. The arrows in FIG. 49 illustrate that the heat pipes 4608 transfer heat from the motor windings to the exterior of the outer housing 4616.

FIGS. 50 and 51 illustrate the air flow path, as illustrated by the arrows, for cooling the electronics module 4604, the heat pipes 4608 and the outer housing 4616 using the same principles discussed above with respect to the fan 4617 and the shroud 4606, but here also using the heat pipes 4608.

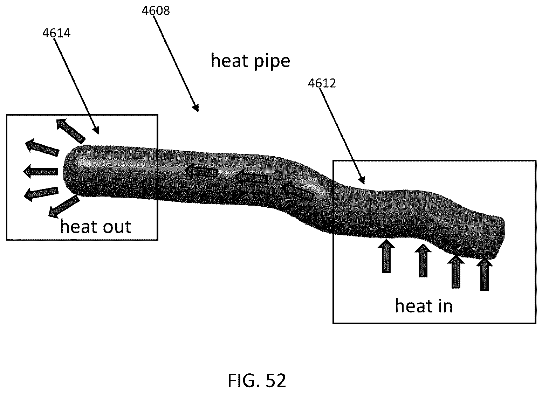

FIG. 52 is an example diagram of a heat pipe 4608 from the electric motor system of FIG. 46. The first end 4612 is in contact with the motor windings and receives the heat from the motor windings. The second end 4614 is in contact with the outer housing 4616 and dissipates the heats.

A noise comparison between a water pump having a gas engine and a water pump having an electric motor system demonstrates the decibel level for the electric motor system (82.0 dB) is less than the decibel level for the gas engine (86.6 dB).

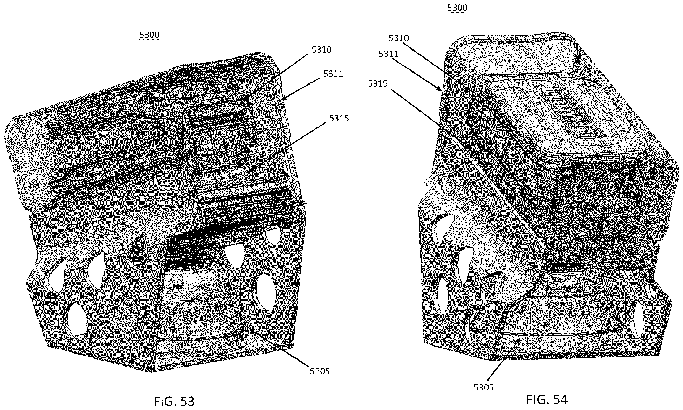

FIGS. 53 and 54 illustrate another example of an electric motor system 5300. In this example, an electric motor 5305 is supported by an angled frame 5311. The angled frame 5311 includes a battery pack 5310 and a battery pack interface 5315 disposed above the electric motor 5305. The electric motor 5305 may include the same active cooling features as described above with respect to electric motor 205.

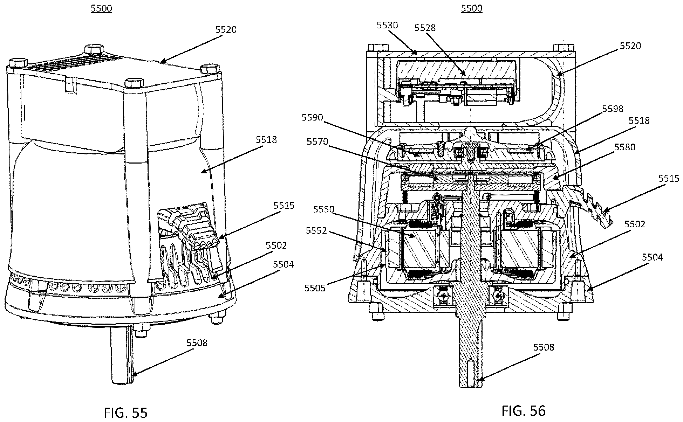

FIGS. 55-57 illustrate another example of an electric motor system 5500. In this example, the electric motor system 5500 may include substantially similar features and functionality as the electric motor system 200 with one difference being that the electric motor system 5500 includes a magnetic transmission that uses magnetic gears to drive a fan at a different speed than the motor. The magnetic gears use magnets (e.g., permanent magnets) instead of teeth like conventional gears and rotate without one magnetic gear needing to come into physical contact with the other magnetic gear. In an example, a fan is magnetically coupled to the motor by magnetic gears and may be driven (or rotated) at a higher speed than the motor to provide increased cooling and increased air flow, thus improving the thermal performance and efficiency of the electric motor system 5500. Additionally, the magnetic transmission enables the improved thermal performance and efficiency without components that drive the fan needing to penetrate the housing of a fully-sealed electric motor.

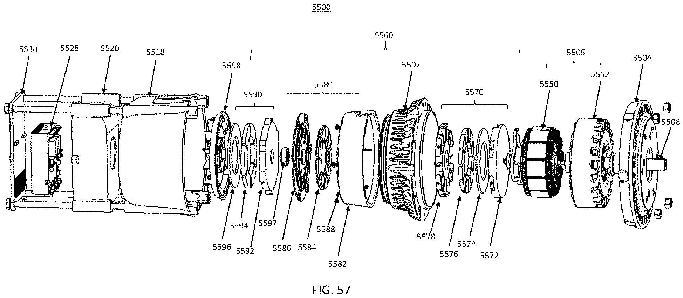

FIG. 55 illustrates a side perspective view the electric motor system 5500, FIG. 56 illustrates a side cross section view of the electric motor system 5500 of FIG. 55, and FIG. 57 illustrates an exploded view of the electric motor system 5500 of FIG. 55.

As seen in FIG. 55, and similar to the electric motor system 200, the electric motor system 5500 includes an outer housing 5502, a lower plate 5504, an output shaft 5508, a strain relief 5515, a shroud 5518, and an electronics housing 5520. The outer housing 5502, the lower plate 5504, the output shaft 5508, the strain relief 5515, the shroud 5518, and the electronics housing 5520 include substantially similar features and functionality as the outer housing 702, lower plate 704, the output shaft 208, the strain relief 715, the shroud 718, and the electronics housing 220, as described above and seen in FIG. 7. These components are also illustrated in FIGS. 56 and 57.

Additionally, FIGS. 56 and 57 illustrate internal components of the electric motor system 5500 including the components for a fan with a magnetic gear transmission. Like the electric motor system 200, the electric motor system 5500 includes an electric motor 5505 having a stator 5550 and a rotor 5552 that are sealed within the outer housing 5502 and the lower plate 5504. The electric motor 5505, including the stator 5550 and the rotor 5552, rotatably drives the output shaft 5508. For example, the electric motor 5505 including the stator 5550 and the rotor 5552 function in a same or similar manner to the electric motor 205 having the stator 1650 and rotor 1652 of the electric motor system 200, as described above and illustrated in FIG. 28. Like the electric motor system 200, the electric motor system 5500 also includes an electronics module 5528 that is disposed within the electronics housing 5520 and covered by a cover 5530, similar to the electronics module 728 that is disposed in the electronics housing 220 and secured by the cover 730, as described above and seen in FIG. 19.

The electric motor system 5500 also includes a magnetic transmission 5560 that includes a first magnetic gear 5570, a modulator 5580, and a second magnetic gear 5590 that work together to drive a fan 5598. In some implementations, the fan 5598 is an integrated fan that is integrated as part of the second magnetic gear 5590. In general, the first magnetic gear 5570 is operably coupled to the rotor 5552 and rotates at the same speed as the rotor 5552 and the output shaft 5508. The magnetic fields generated by the rotation of the first magnetic gear 5570 are modulated by the modulator 5580 to impart a torque to the second magnetic gear 5590 causing the second magnetic gear 5590 to rotate at a different speed than the first magnetic gear 5570. The second magnetic gear 5590 is coupled to the fan 5598 to rotate the fan at the same speed as the second magnetic gear 5590. The difference between a first rotational speed and first rotational direction of the first magnetic gear 5570 and a second rotational speed and a second rotational direction of the second magnetic gear 5590, and thus the fan 5598, is determined by several factors including the number of permanent magnet pairs in the first magnetic gear 5570 and the second magnetic gear 5590 and the number of modulator blocks in the modulator 5580. It may be desirable to rotate the second magnetic gear 5590 and the fan 5598 at a faster speed than the first magnetic gear 5570 in this example implementation to provide increased air flow and to improve the thermal performance of the electric motor 5505. In other example implementations, the second magnetic gear 5590 and the fan 5598 may rotate at a slower speed than the first magnetic gear 5570, but still in different rotational directions, based on the use context of the magnetic transmission. The components of the first magnetic gear 5570, the modulator 5580, and the second magnetic gear 5590 are discussed in more detail below.

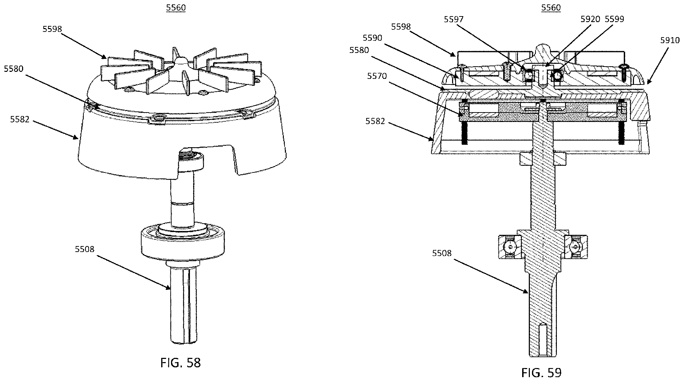

Referring also to FIGS. 58 and 59, FIG. 58 is a side perspective view of the magnetic transmission 5560 of the electric motor system 5500 of FIG. 55 and FIG. 59 is a cross section view of the magnetic transmission 5560 of FIG. 58. In FIGS. 58 and 59, the components of the magnetic transmission 5560 are illustrated as isolated from other components of the electric motor system 5500. The magnetic transmission 5560 is an axial configuration magnetic transmission, where the first magnetic gear 5570 concentrically surrounds and is coupled to the output shaft 5508.

The first magnetic gear 5570 may rotate with the output shaft 5508 at the same speed as the output shaft 5508. The first magnetic gear 5570 includes a first magnetic gear lower bracket 5572, a first magnetic gear back iron 5574, first magnetic gear magnetic blocks 5576, and a first magnetic gear top bracket 5578.

The modulator 5580 includes a modulator lower plate 5582, modulator blocks 5584, a modulator top plate 5586, and fasteners 5588. The modulator 5580 may be fixed in place to the outer housing 5502, e.g., using the fasteners 5588. The modulator 5580 is non-rotating. The modulator blocks 5584 may be ferromagnetic elements. The modulator lower plate 5582 and the modulator top plate 5586 may be non-ferromagnetic elements. The modulator blocks 5584 are embedded between the modulator lower plate 5582 and the modulator top plate 5586, where the modulator blocks 5584 are radially spaced apart.

A fan support shaft 5599 may be fixed to the modulator top plate 5586. The fan support shaft 5599 may allow for rotation of the fan 5598 relative to the fan support shaft 5599. The second magnetic gear 5590 and the fan 5598 rotate around the fan support shaft 5599 through a bearing 5597, which is a component of the second magnetic gear 5590.

An air gap 5910 may separate the second magnetic gear 5590 and the modulator top plate 5586 of the modulator 5580. The air gap 5910 may be narrow, while maintaining sufficient clearance between second magnetic gear 5590 and the modulator 5580. In some implementations, the air gap 5910 may be between a range of approximately 0.2mm to 6mm. The second magnetic gear 5590 rotates independent of the first magnetic gear 5570. The second magnetic gear 5590 includes a second magnetic gear lower bracket 5592, second magnetic gear magnetic blocks 5594, and a second magnetic gear back iron 5596. In some implementations, the fan 5598 is integrated as part of the second magnetic gear 5590 through a bearing 5597. The fan 5598 may function as a second magnetic gear top bracket. The bearing 5597 may be mounted on the fan support shaft 5599 through a fastener 5920 (e.g., a bolt).

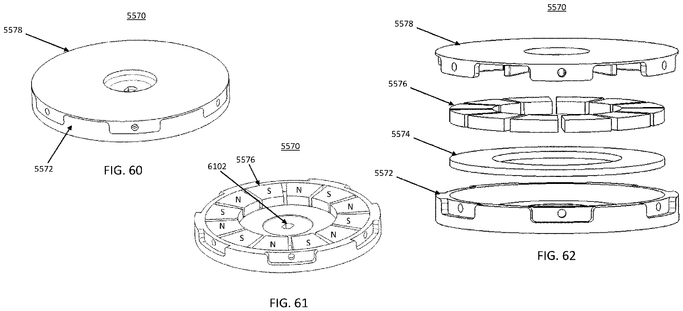

FIGS. 60-62 illustrate detailed views of the first magnetic gear 5570. FIG. 60 is a perspective view of the first magnetic gear 5570 of FIG. 57. FIG. 61 is a perspective view of the first magnetic gear 5570 of FIG. 60 with the first magnetic gear top bracket 5578 removed. FIG. 62 is an exploded view of the first magnetic gear 5570 of FIG. 60. As noted above, the first magnetic gear 5570 includes the first magnetic gear lower bracket 5572, the first magnetic gear back iron 5574, first magnetic gear magnetic blocks 5576, and the first magnetic gear top bracket 5578.

The first magnetic gear lower bracket 5572 is cylindrical in shape and includes an opening 6102 to surround and engage with a portion of the output shaft 5508 so that the first magnetic gear 5570 rotates with the output shaft 5508. The first magnetic gear lower bracket 5572 is configured to hold pairs of first magnetic gear magnetic blocks 5576. The pairs of first magnetic gear magnetic blocks 5576 are disposed around the outer periphery of the first magnetic gear lower bracket 5572 in a pattern of alternating magnetic polarity, e.g., a series of magnetic blocks with a north pole (labeled "N") and with a south pole (labeled "S"). A pair of first magnetic gear magnetic blocks 5576 includes one north pole and one south pole.

The first magnetic gear back iron 5574 forms a metallic cylinder that is disposed on the first magnetic gear lower bracket 5572. Then, the pairs of first magnetic gear magnetic blocks 5576 are disposed on the first magnetic gear back iron 5574. The first magnetic gear back iron 5574 forms a return path for the magnetic flux and works to channel the magnetic field lines generated by the first magnetic gear magnetic blocks 5576. The first magnetic gear back iron 5574 may be a ferromagnetic component that acts as a return path for the magnetic flux generated by the first magnetic gear magnetic blocks 5576 to complete a magnetic circuit. The structure of the first magnetic gear back iron 5574 is configured to concentrate the magnetic flux generated by the first magnetic gear magnetic blocks 5576 for efficient transmission of the torque between the first magnetic gear 5570 and the second magnetic gear 5590. The first magnetic gear back iron 5574 also provides structural stiffness and support to the first magnetic gear 5570.

The first magnetic gear top bracket 5578 may be similar to the shape of the first magnetic gear lower bracket 5572 and may fit on top of the first magnetic gear lower bracket 5572 to hold the first magnetic gear magnetic blocks 5576 in place. The first magnetic gear top bracket 5578 and the first magnetic gear lower bracket 5572 may have cooperating features (e.g., tongue and groove features) to lock the first magnetic gear top bracket 5578 and the first magnetic gear lower bracket 5572 together.

In this example implementation, the first magnetic gear 5570 includes six (6) pairs of first magnetic gear magnetic blocks 5576. The number and arrangement of magnetic blocks may be varied. The number of pairs of magnetic blocks in the first magnetic gear 5570 relative to the number of pairs of magnetic blocks in the second magnetic gear 5590 determine the magnetic gear ratio and how fast the fan 5598 will rotate relative to the output shaft 5508.

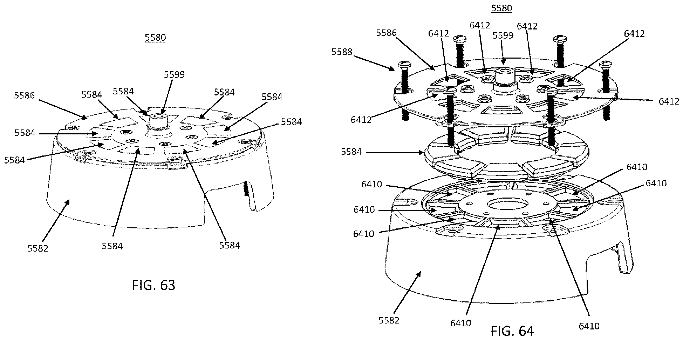

FIGS. 63 and 64 illustrate detailed views of the modulator 5580. FIG. 63 is a perspective view of the modulator 5580 of FIG. 57. FIG. 64 is an exploded view of the modulator 5580 of FIG. 63. As noted above, the modulator 5580 includes the modulator lower plate 5582, the modulator blocks 5584, the modulator top plate 5586, and the fasteners 5588. In this example, the modulator top plate 5586 includes the fan support shaft 5599 around which the fan 5598, which is integrated with the second magnetic gear 5590, rotates through bearing 5597.

The modulator lower plate 5582 is fixed to the outer housing 5502 and is stationary. That is, the modulator lower plate 5582 does not rotate. The modulator lower plate 5582 includes a series of axially-extending recesses 6410 formed within the modulator lower plate 5582 for holding the modulator blocks 5584. The modulator lower plate 5582 may be made of a non-ferritic material, such as plastic or aluminum.

The modulator blocks 5584 may be secured and embedded in the recesses 6410 and the modulator blocks 5584 may be made of a ferritic material. In one example implementation, the modulator blocks 5584 may be made of Somaloy^{®} 3P, a material sold by Hoganas AB of Hoganas, Sweden. In this example, there are nine (9) modulator blocks 5584. The number of modulator blocks 5584 is based on the sum of the pairs of first magnetic gear magnetic blocks 5576 and the second magnetic gear magnetic blocks 5594. The modulator blocks 5584 may vary based on the number pairs of magnetic blocks in the first magnetic gear 5570 and the second magnetic gear 5590.

The modulator top plate 5586 forms a cover to secure the modulator blocks 5584 in place. The modulator top plate 5586 includes openings 6412, which are smaller than the area of the modulator blocks 5584 so that the modulator blocks 5584 are exposed while being retained in the modulator lower plate 5582. The fasteners 5588 secure the modulator top plate 5586 to the modulator lower plate 5582 to secure the modulator blocks 5584 in the recesses 6410. The modulator top plate 5586 includes the fan support shaft 5599 around which the bearing 5597 and the fan 5598 rotate.

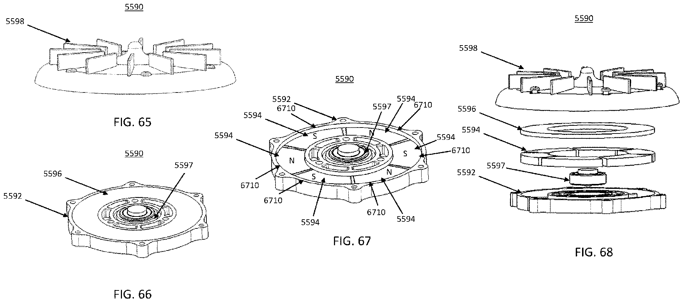

FIGS. 65-68 illustrate detailed view of the second magnetic gear 5590. FIG. 65 is a perspective view of the second magnetic gear 5590 of FIG. 57 with the fan 5598 integrated as part of the second magnetic gear 5590. FIG. 66 is a perspective view of the second magnetic gear 5590 of FIG. 65 with the fan 5598 removed. FIG. 67 is a perspective view of the second magnetic gear 5590 of FIG. 66 with the second magnetic gear back iron 5596 removed. FIG. 68 is an exploded view of the second magnetic gear 5590 of FIG. 65.

As discussed above, the second magnetic gear 5590 includes a second magnetic gear lower bracket 5592 that is configured to hold pairs of second magnetic gear magnetic blocks 5594. The second magnetic gear lower bracket 5592 includes pockets 6710 (or recesses) for holding the pairs of second magnetic gear magnetic blocks 5594. The pairs of second magnetic gear magnetic blocks 5594 are disposed around the outer periphery of the second magnetic gear lower bracket 5592 in alternating order of a magnetic block with a north pole (labeled "N") and a magnetic block with a south pole (labeled "S"). A pair of second magnetic gear magnetic blocks 5594 includes one north pole magnetic block and one south pole magnetic block.

The second magnetic gear back iron 5596 forms a metallic cylinder that is disposed on the pairs of second magnetic gear magnetic blocks 5594. The second magnetic gear back iron 5596 forms a return path for the magnetic flux and works to channel the magnetic field lines generated by the second magnetic gear magnetic blocks 5594. The second magnetic gear back iron 5596 may be a ferromagnetic component that acts as a return path for the magnetic flux generated by the second magnetic gear magnetic blocks 5594 to complete a magnetic circuit. The structure of the second magnetic gear back iron 5596 is configured to concentrate the magnetic flux generated by the second magnetic gear magnetic blocks 5594 for efficient transmission of the torque between the first magnetic gear 5570 and the second magnetic gear 5590. The second magnetic gear back iron 5596 also provides structural stiffness and support to the second magnetic gear 5590.

The fan 5598 may be integrated as part of the second magnetic gear 5590 and rotates around the fixed fan support shaft 5599 through the bearing 5597. The fan support shaft 5599 may be fixed on the modulator top plate 5586 and the bearing 5597 may be disposed around the fan support shaft 5599. The underside of the fan 5598 may include a recess into which the bearing 5597 is press fit and the second magnetic gear 5590 with the fan 5598 may be disposed around the fan support shaft 5599.

In this example implementation, the second magnetic gear 5590 includes three (3) pairs of second magnetic gear magnetic blocks 5594. The number of pairs of magnetic blocks in the second magnetic gear 5590 relative to the number of pairs of magnetic blocks in the first magnetic gear 5570 determine the magnetic gear ratio and how fast the fan 5598 will rotate relative to the output shaft 5508.

In this example implementation, the magnetic gear ratio is three pairs of second magnetic gear magnetic blocks 5594 to six pairs of first magnetic gear magnetic blocks 5576 to, thus providing a 1:2 magnetic gear ratio. For a motor speed and corresponding output shaft 5508 speed of 3600 RPM, the fan 5598 will rotate at twice the speed for a speed of 7200 RPM. As mentioned above, the number of modulator blocks 5584 corresponds to the total number of pairs of magnetic blocks in the first magnetic gear 5570 and the second magnetic gear 5590. The magnetic gear ratio may be changed by changing the number of pairs of magnetic blocks in the first magnetic gear 5570 and/or the second magnetic gear 5590, along with a corresponding change to the number of modulator blocks 5584.

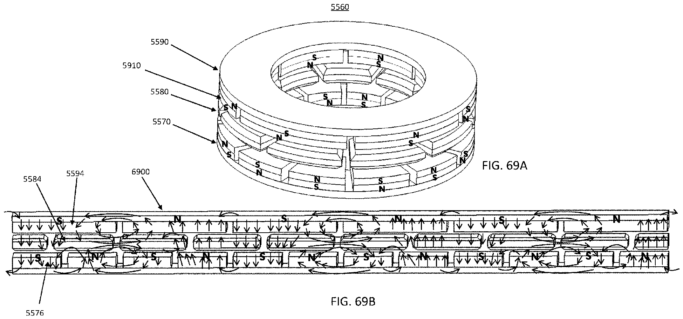

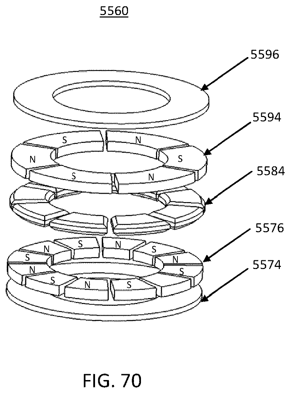

FIG. 69A is a perspective view of the magnetic blocks of the magnetic transmission 5560 of FIG. 57. FIG. 69B is a schematic diagram of the magnetic blocks of FIG. 69A, projected in a line with a magnetic flux plot 6900. FIG. 70 is an exploded view of the magnetic blocks and modulator blocks of the magnetic transmission 5560. The magnetic transmission 5560 includes the second magnetic gear 5590, the modulator 5580, and the first magnetic gear 5570. The magnetic flux plot 6900 illustrates those layers of the magnetic transmission 5560 in a line of the magnetic blocks from each layer. The magnetic flux plot 6900 illustrates the three pairs of second magnetic gear magnetic blocks 5594, the nine modulator blocks 5584, and the six pairs of first magnetic gear magnetic blocks 5576. The arrows in the magnetic flux plot 6900 illustrate the magnetic flux flow between the magnetic blocks in each of the layers and between the layers. The magnetic flux flows out of the North pole of each of the first magnetic gear magnetic blocks 5576, then through the modulator blocks 5584 to the South pole of the corresponding second magnetic gear magnetic blocks 5594 for the second magnetic gear 5590. The magnetic flux flow continues to the second magnetic gear back iron 5596, then back to the North pole of the adjacent block of the second magnetic gear magnetic blocks 5594, then through the modulator blocks 5584 to the South pole of the first magnetic gear magnetic blocks 5576 of the first magnetic gear 5570, then back through the first magnetic gear back iron 5574, thus forming a closed loop path for the magnetic flux. The magnetic fields generated by the rotation of the first magnetic gear 5570 are modulated by the modulator 5580 to impart a torque to the second magnetic gear 5590 causing the second magnetic gear 5590 to rotate in an opposite direction from the first magnetic gear 5570 and to rotate at a different speed than the first magnetic gear 5570 based on the magnetic gear ratio, which is dependent of the number of pairs of magnetic blocks in the first magnetic gear 5570 and the second magnetic gear 5590.

In operation, as the first magnetic gear magnetic blocks 5576 and the first magnetic gear 5570 rotate with the output shaft 5508, a magnetic flux is generated and transmitted through the modulator blocks 5584 of the modulator 5580. The modulator 5580 transmits the magnetic flux across the air gap 5910 to the second magnetic gear magnetic blocks 5594 of the second magnetic gear 5590 causing the second magnetic gear 5590 to rotate at two times the speed of the first magnetic gear 5570 based on the ratio of the number of pairs of first magnetic gear magnetic blocks 5576 and the second magnetic gear magnetic blocks 5594, as discussed above.

Examples have been provided so that this disclosure will be thorough, and to fully convey the scope to those who are skilled in the art. Numerous specific details are set forth such as examples of specific components, devices, and methods, to provide a thorough understanding of examples of the present disclosure. It will be apparent to those skilled in the art that specific details need not be employed, that the examples may be embodied in many different forms and that neither should be construed to limit the scope of the disclosure. In some examples, well-known processes, well-known device structures, and well-known technologies are not described in detail.

The terminology used herein is for the purpose of describing particular examples only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

While certain features of the described examples have been illustrated as described herein, many modifications, substitutions, changes, and equivalents will now occur to those skilled in the art. It is, therefore, to be understood that the appended claims are intended to cover all such modifications and changes as fall within the scope of the examples.

### Other Aspects of this Disclosure

1. An electric motor system, comprising:
   a motor housing;
   an electric motor disposed in the motor housing, the electric motor including a stator and a rotor that rotates relative to the stator;
   an output shaft coupled to the rotor and configured to transmit torque from the electric motor to power equipment;
   a shroud received over at least a portion of the motor housing;
   an electronics housing containing electronics for controlling operation of the electric motor; and
   a first fan outside of the motor housing, driven by rotation of the electric motor, and configured to cause airflow through the electronics housing and within the shroud around an exterior of the motor housing.
2. The electric motor system of aspect 1, wherein:
   the motor housing includes an outer housing, a lower plate coupled to the outer housing, and a motor cover coupled to a top of the outer housing;
   a first end of the output shaft is exposed through an opening in the lower plate and a second end of the output shaft extends through an opening in the motor cover; and
   the first fan is disposed adjacent a top of the motor cover.
3. The electric motor system of aspects 1 or 2, wherein a vent is formed between a bottom of the shroud and a lower rim of the motor housing.
4. The electric motor system of any preceding aspect, wherein the motor housing includes a plurality of fins disposed on an outer surface of the motor housing.
5. The electric motor system of any preceding aspect, wherein the shroud and the motor housing form a gap between the shroud and the motor housing and the first fan causes the airflow through the gap.
6. The electric motor system of aspect 5, wherein the gap defines a first distance between the motor housing and the shroud adjacent a top of the shroud and a second distance between the motor housing and the shroud adjacent a bottom of the shroud, the first distance being greater than the second distance.
7. The electric motor system of any preceding aspect, wherein:
   the motor housing includes a strain relief for passage of a plurality of wires that are coupled to the electric motor; and
   the shroud includes a cutout region through which the strain relief is exposed.
8. The electric motor system of any preceding aspect, wherein the electronics housing is mounted on a top portion of the shroud and the electronics housing has an opening in a bottom portion of the electronics housing in communication with an opening in the top portion of the shroud.
9. The electric motor system of any preceding aspect, wherein the electronics housing includes a cover attached to the electronics housing, the cover including at least one air intake opening.
10. The electric motor system of any preceding aspect, wherein the electronics includes an electronics module with a heat sink.
11. The electric motor system of any preceding aspect, further comprising:
   a frame, wherein the electronics housing, the shroud, and the motor housing are coupled to the frame, the frame including a power equipment mounting surface for mounting to the power equipment; and
   a battery pack interface couplable to the frame, the battery pack interface configured to receive a battery pack.
12. The electric motor system of aspect 11, wherein the battery pack interface is couplable to the frame in a plurality of orientations relative to the frame.
13. The electric motor system of any preceding aspect, wherein the first fan is configured to rotate at a first speed that is different than a motor speed of the rotor.
14. The electric motor system of any preceding aspect, wherein the first fan is coupled to the rotor by a magnetic transmission.
15. The electric motor system of any preceding aspect, further comprising at least one heat pipe disposed in the motor housing and extending into a gap defined between the motor housing and the shroud.
16. The electric motor system of any preceding aspect further comprising a second fan disposed within the motor housing and driven by the electric motor, the second fan configured to cause airflow within the motor housing.

## Claims

1. An electric motor system (200), comprising:
a motor housing;
an electric motor (205) disposed in the motor housing, the electric motor (205) including a stator (1650) and a rotor (1652) that rotates relative to the stator (1650);
an output shaft (208) coupled to the rotor (1652) and configured to transmit torque from the electric motor (205) to power equipment;
a shroud (718) received over at least a portion of the motor housing;
a first fan (716) outside of the motor housing, rotatably driven by rotation of the electric motor (205), and configured to cause airflow within the shroud (718) and an exterior of the motor housing; and
a second fan (2860) disposed within the motor housing and driven by the electric motor (205), the second fan (2860) configured to cause airflow within the motor housing.

2. The electric motor system (200) of claim 1, wherein:
the motor housing includes an outer housing (702), a lower plate coupled to the outer housing (702), and a motor cover (705) coupled to a top of the outer housing (702);
a first end of the output shaft (208) is exposed through an opening in the lower plate and a second end of the output shaft (208) extends through an opening in the motor cover (705); and
the first fan (716) is disposed adjacent a top of the motor cover (705).

3. The electric motor system (200) of claim 1 or 2, wherein a vent is formed between a bottom of the shroud (718) and a lower rim of the motor housing.

4. The electric motor system (200) of any preceding claim, wherein the motor housing includes a plurality of fins disposed on an outer surface of the motor housing.

5. The electric motor system (200) of any preceding claim, wherein the shroud (718) and the motor housing form a gap between the shroud (718) and the motor housing and the first fan (716) causes the airflow through the gap.

6. The electric motor system (200) of claim 5, wherein the gap defines a first distance between the motor housing and the shroud (718) adjacent a top of the shroud (718) and a second distance between the motor housing and the shroud (718) adjacent a bottom of the shroud (718), the first distance being greater than the second distance.

7. The electric motor system (200) of any preceding claim, wherein:
the motor housing includes a strain relief for passage of a plurality of wires that are coupled to the electric motor (205); and
the shroud (718) includes a cutout region through which the strain relief is exposed.

8. The electric motor system (200) of any preceding claim, further comprising an electronics housing (220) containing electronics for controlling operation of the electric motor (205); optionally
wherein the electronics housing (220) is mounted on a top portion of the shroud (718) and the electronics housing (220) has an opening in a bottom portion of the electronics housing (220) in communication with an opening in the top portion of the shroud (718); and/or
wherein the electronics housing (220) includes a cover attached to the electronics housing (220), the cover including at least one air intake opening.

9. The electric motor system (200) of claim 8, wherein the electronics housing (220) includes an electronics module (728) with a heat sink (728, 729, 1218, 1220); optionally wherein the heat sink comprises a plurality of fins (1218) protruding from a bottom end (1216) of the electronics housing (220).

10. The electric motor system (200) of claim 8 or claim 9, wherein the electronics housing (220) includes a lip (1105) around an inner surface of the electronics housing, the lip including a plurality of slots (1108A, 1108B, 1110A, 1110B); and the electronics module includes a plurality of tabs (1212A, 1212B, 1214A, 1214B), the plurality of tabs fitting into the plurality of slots in the lip.

11. The electric motor system (200) of claim 10 when dependent on claim 9, wherein the heat sink (728, 729, 1218, 1220) is connected to a set of the plurality of tabs (1212A, 1212B, 1214A, 1214B) on the electronics module.

12. The electric motor system (200) according to any one of claims 8 to 11, further comprising:
a frame, wherein the electronics housing (220), the shroud (718), and the motor housing are coupled to the frame, the frame including a power equipment mounting surface for mounting to the power equipment; and
a battery pack interface (3515) couplable to the frame, the battery pack interface (3515) configured to receive a battery pack (3510);
optionally wherein the battery pack interface (3515) is couplable to the frame in a plurality of orientations relative to the frame.

13. The electric motor system (200) of any preceding claim, wherein
the first fan (716) is configured to rotate at a first speed that is different than a motor speed of the rotor (1652); and/or
the first fan (716) is configured to rotate at a first speed that is different than a second speed of the second fan (2860).

14. The electric motor system (200) of any preceding claim, wherein the first fan (716) is coupled to the rotor (1652) by a magnetic transmission.

15. The electric motor system (200) of any preceding claim, further comprising at least one heat pipe (4608) disposed in the motor housing and extending into a or the gap defined between the motor housing and the shroud (718).
